(19) Europäisches Patentamt
European Patent Office
Office européen des brevets

(11) **EP 3 527 366 A1**

(12) **EUROPEAN PATENT APPLICATION**
published in accordance with Art. 153(4) EPC

(43) Date of publication:
**21.08.2019 Bulletin 2019/34**

(21) Application number: **17860022.7**

(22) Date of filing: **28.07.2017**

(51) Int Cl.:
***B32B 27/00*** *(2006.01)* ***B05D 3/06*** *(2006.01)*
***B05D 5/06*** *(2006.01)* ***B05D 7/24*** *(2006.01)*
***B32B 27/16*** *(2006.01)* ***B32B 27/36*** *(2006.01)*
***C09D 4/02*** *(2006.01)* ***C09D 183/02*** *(2006.01)*

(86) International application number:
**PCT/JP2017/027394**

(87) International publication number:
**WO 2018/070090 (19.04.2018 Gazette 2018/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.10.2016 JP 2016199802**

(71) Applicant: **Shin-Etsu Chemical Co., Ltd.**
**Tokyo 100-0004 (JP)**

(72) Inventor: **MASUDA, Kohei**
**Annaka-shi**
**Gunma 379-0224 (JP)**

(74) Representative: **Mewburn Ellis LLP**
**City Tower**
**40 Basinghall Street**
**London EC2V 5DE (GB)**

(54) **LAMINATED BODY AND PRODUCTION METHOD THEREFOR**

(57) This laminated body comprises an organic resin substrate, and single layer of an active energy ray-curable resin layer (i) and an inorganic deposition layer (ii) that are sequentially laminated on the organic resin substrate, wherein a power spectrum obtained by performing Fourier transformation on the wavenumber of a reflected wave spectrum obtained by reflectivity spectroscopy at the layer (i) and plotting the amplitude thereof with respect to the length dimension has, at $L_1$ and $L_2$ that are equal to or greater than a length dimension threshold $L_0$, a first local maximum value $S_1$ and a second local maximum value $S_2$, respectively, and when $L_0$ is defined as an arbitrary value within a range of $1\text{-}3\times10^{-6}$ m, in a defined range of the power spectrum excluding the range of $L_0$ or less, the first local maximum value $S_1$ has a signal-to-noise ratio $S_1/N$ of at least 5 with respect to noise N, and the second local maximum value $S_2$ has a signal-to-noise ratio $S_2/N$ of at least 2 with respect to noise N. The laminated body exhibits, despite the fact that said laminated body has a single intermediate layer composed of an active energy ray-curable film between the organic resin substrate and the inorganic deposition layer, weather fastness and adhesiveness comparable to or better than those of a laminated body having a plurality of thermoset films as intermediate layers.

**FIG.1**

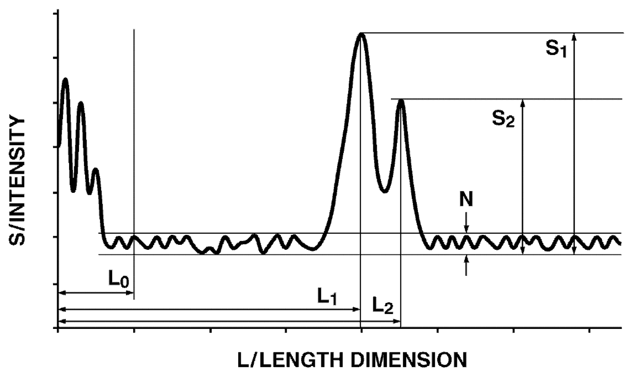


EP 3 527 366 A1

## Description

### TECHNICAL FIELD

This invention relates to a laminate and a method for preparing the same. More particularly, it relates to a laminate comprising an active energy ray-curable resin layer and an inorganic deposition layer deposited on an organic resin substrate, and a method for preparing the same.

### BACKGROUND ART

Laminates having an inorganic deposition layer disposed on an organic resin substrate are regarded attractive as glass replacement material since they have improved properties including good workability and light weight attributable to the organic resin, and good mar resistance and chemical resistance attributable to the inorganic deposition layer.

In these laminates, an intermediate layer is generally interposed between the organic resin substrate and the inorganic deposition layer for the purposes of complementing the weather resistance of the organic resin substrate and improving the adhesion between the organic resin substrate and the inorganic deposition layer.

In the prior art, various types of intermediate layers are known. For instance, Patent Document 1 proposes a multilayer heat-curable intermediate layer. Patent Document 2 proposes a single-layered heat-curable intermediate layer which does not require a primer even on a polycarbonate resin substrate. Patent Document 3 proposes a photo-curable intermediate layer which substantially requires a primer on a polycarbonate substrate. Patent Document 4 proposes a single-layered photo-curable intermediate layer which does not require a primer even on a polycarbonate resin substrate.

These intermediate layers are generally categorized in terms of cure mode such as heat-curable or photo-curable, and the number of coating steps, that is, whether or not a primer is necessary. The intermediate layers in one category have their own features.

The heat-curable type intermediate layer is industrially disadvantageous because it requires a long time and thermal energy for production, but regarded superior in weather resistance. The photo-curable type intermediate layer is industrially advantageous because it can be produced in a short time and with low energy, but a lack of weather resistance has been pointed out (see Non-Patent Document 1).

It is thus needed to develop a laminate having an industrially advantageous photo-curable intermediate layer which can be produced in a short time and with low energy and has good weather resistance at least comparable to that of the heat-curable type.

Notably, although a smaller number of coating steps is preferable, it is believed that the use of a primer leads to improvements in adhesion and weather resistance.

A film thickness measuring method using reflected wave interference light of a thin film is known (see Patent Document 5). It is also known that even when a thin film has a birefringence, reflected wave interference light can be used for film thickness measurement (see Patent Document 6).

Patent Document 6 discloses that a power spectrum obtained by Fourier transform of a reflected wave interference spectrum of a thin film with respect to wave number shows split peaks. The split peaks of the power spectrum ideally have approximately the same height and breadth (in paragraph [0006]). When the intensity of the power spectrum is asymmetrical, it is caused by difference in crystal structure, polarization, vibration of a film on measurement, FFT processing, and synergistic effects thereof (in paragraph [0007]).

In the same principle as in Patent Document 5, when a thin film consists of a plurality of layers (e.g. thin films in Patent Documents 1 and 3), the power spectrum has a plurality of maximums because interference light originates from their interfaces.

On the other hand, when a thin film is a single layer and not birefringent (e.g. thin films in Patent Documents 2 and 4), it is generally believed that the power spectrum does not have a plurality of maximums. It is also believed that if a plurality of maximums are observed, they are errors attributable to vibration of a film on measurement and FFT processing.

As discussed above, the power spectrum obtained from Fourier transform of a reflected wave spectrum of a thin film is used for film thickness measurement. However, physical understanding of a peak splitting in a power spectrum is limited. It is unknown so far that the peak splitting in a power spectrum and the extent of the peak splitting can be used as useful indices for characteristic analysis of a laminate. The peak splitting and the extent of peak splitting have never been utilized for such a purpose.

PRIOR ART DOCUMENTS

PATENT DOCUMENTS

Patent Document 1: JP 5768748

Patent Document 2: JP-A 2014-531334

Patent Document 3: WO 2013/151169

Patent Document 4: JP-A 2013-035274

Patent Document 5: JP 5782353

Patent Document 6: JP-A 2015-059750

NON-PATENT DOCUMENTS

Non-Patent Document 1: Journal of Polymer Research, 2011, 18 (4), pp 721-729

SUMMARY OF THE INVENTION

TECHNICAL PROBLEM

An object of the invention, which has been made under the above circumstances, is to provide a laminate having a single intermediate layer consisting of an active energy ray-curable (photo-curable) film between an organic resin substrate and an inorganic deposition layer, and yet showing weather resistance and adhesion at least comparable to those of a laminate having a plurality of heat-curable films as the intermediate layer, and a method for preparing the same.

SOLUTION TO THE PROBLEM

Making extensive investigations to attain the above object, the inventors have found that, with the proviso that a coated article has a cured product layer comprising an active energy ray-curable resin composition formed on an organic resin substrate wherein a peak splitting occurs at a certain S/N ratio in a power spectrum obtained from Fourier transform of a reflected wave spectrum of the layer with respect to wave number, a laminate further having an inorganic deposition layer disposed on the cured product layer exhibits improved weather resistance and adhesion over those laminates wherein the power spectrum is not split. The invention is predicated on this finding.

Although a power spectrum obtained by Fourier transforming a reflected wave spectrum of a thin film has been used for film thickness measurement as described above with reference to Patent Documents 5 and 6, it is unknown so far that the power spectrum can be utilized for characteristic analysis of a laminate and that the performance of a laminate can be evaluated by a particular index in the spectrum.

The invention is defined below.

1. A laminate comprising an organic resin substrate, and (i) a single-layered active energy ray-curable resin layer and (ii) an inorganic deposition layer disposed on the substrate in the described order, wherein
a power spectrum which is obtained by analyzing layer (i) on the organic resin substrate by reflectance spectroscopy, Fourier transforming the reflected wave spectrum with respect to wave number, and plotting amplitude versus length dimension, has a first maximum value $S_1$ and a second maximum value $S_2$ at lengths $L_1$ and $L_2$ which are equal to or greater than a threshold $L_0$ in length dimension, respectively,
in a domain of the power spectrum which is defined by excluding the threshold $L_0$ and less, provided that the threshold $L_0$ is an arbitrary value of $1\times10^{-6}$ to $3\times10^{-6}$ m,
the first maximum value $S_1$ at $L_1$ shows a signal $S_1$ to noise N ratio ($S_1$/N) of at least 5, and the second maximum value $S_2$ at $L_2$ shows a signal $S_2$ to noise N ratio ($S_2$/N) of at least 2.
2. The laminate of 1 wherein $S_1$ and $S_2$ satisfy $0.1\ S_1 \le S_2 \le 0.9S_1$.
3. The laminate of 1 or 2 wherein $L_1$ and $L_2$ satisfy $L_1 < L_2 \le 1.5L_1$.

4. The laminate of any one of 1 to 3 wherein $L_1$ satisfies $5\times10^{-6} \leq L_1 \leq 2\times10^{-5}$ m.
5. The laminate of any one of 1 to 4 wherein the organic resin substrate comprises a polycarbonate.
6. The laminate of any one of 1 to 5 wherein the active energy ray-curable resin layer (i) comprises (A) a silicate oligomer having the general formula (1) and (B) a bifunctional (meth)acrylate having the general formula (2):

[Chem. 1]

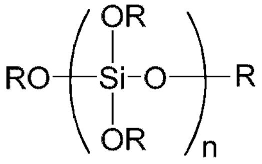 (1)

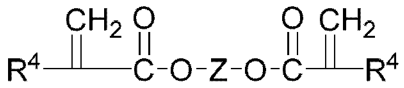 (2)

in formula (1), R is $R^1$ or $R^2$, $R^1$ is a $C_1$-$C_4$ alkyl group, $R^2$ is a substituent having the following general formula (3), a molar ratio ($R^1/R^2$) of $R^1$ to $R^2$ in all R is from 0 to 10, and n is an integer of 1 to 10,
in formula (2), Z is a divalent organic group containing a $C_4$-$C_{20}$ straight, branched, or cyclic saturated hydrocarbon, and $R^4$ is each independently hydrogen or methyl,

[Chem. 2]

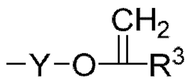 (3)

in formula (3), Y is a $C_2$-$C_{10}$ straight alkylene group, and $R^3$ is hydrogen or methyl.

7. The laminate of any one of 1 to 5 wherein the inorganic deposition layer (ii) is a plasma polymer of an organosilicon compound.
8. A method for preparing a laminate comprising the steps of depositing (i) a single-layered active energy ray-curable resin layer and (ii) an inorganic deposition layer on an organic resin substrate in sequence, wherein
a power spectrum which is obtained by analyzing layer (i) on the organic resin substrate by reflectance spectroscopy, Fourier transforming the reflected wave spectrum with respect to wave number, and plotting amplitude versus length dimension, has a first maximum value $S_1$ and a second maximum value $S_2$ at lengths $L_1$ and $L_2$ which are equal to or greater than a threshold $L_0$ in length dimension, respectively,
in a domain of the power spectrum which is defined by excluding the threshold $L_0$ and less, provided that the threshold $L_0$ is an arbitrary value of $1 \times 10^{-6}$ to $3 \times 10^{-6}$ m,
the first maximum value $S_1$ at $L_1$ shows a signal $S_1$ to noise N ratio ($S_1$/N) of at least 5, and the second maximum value $S_2$ at $L_2$ shows a signal $S_2$ to noise N ratio ($S_2$/N) of at least 2.
9. The method of 8 wherein the step of depositing single-layered active energy ray-curable resin layer (i) on the organic resin substrate comprises the steps of:

($\alpha$) coating the organic resin substrate only once with an active energy ray-curable coating composition containing (A) a silicate oligomer having the general formula (1) and (B) a bifunctional (meth)acrylate having the general formula (2),
($\beta$) heating the coating composition at 60 to 100°C for 3 to 15 minutes after coating and before curing of the coating composition, and
($\gamma$) irradiating active energy ray to the active energy ray-curable coating composition for curing the coating composition,

[Chem. 3]

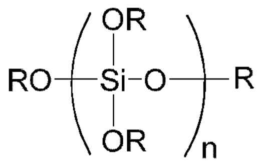 (1)

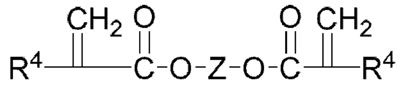 (2)

in formula (1), R is $R^1$ or $R^2$, $R^1$ is a $C_1$-$C_4$ alkyl group, $R^2$ is a substituent having the following general formula (3), a molar ratio ($R^1/R^2$) of $R^1$ to $R^2$ in all R is from 0 to 10, and n is an integer of 1 to 10,
in formula (2), Z is a divalent organic group containing a $C_4$-$C_{20}$ straight, branched, or cyclic saturated hydrocarbon, and $R^4$ is each independently hydrogen or methyl,

[Chem. 4]

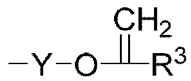 (3)

in formula (3), Y is a $C_2$-$C_{10}$ straight alkylene group, and $R^3$ is hydrogen or methyl.

10. The method of 8 or 9 wherein $S_1$ and $S_2$ satisfy $0.1 S_1 \leq S_2 \leq 0.9S_1$.
11. The method of any one of 8 to 10 wherein $L_1$ and $L_2$ satisfy $L_1 < L_2 \leq 1.5L_1$.
12. The method of any one of 8 to 11 wherein $L_1$ satisfies $5\times10^{-6} \leq L_1 \leq 2\times10^{-5}$ m.
13. The method of any one of 8 to 12 wherein the organic resin substrate comprises a polycarbonate.
14. The method of any one of 8 to 13 wherein the inorganic deposition layer (ii) is formed on the active energy ray-curable resin layer (i) by plasma polymerization of an organosilicon compound.
15. The method of any one of 8 to 14, comprising, after step ($\gamma$) and before deposition of inorganic deposition layer (ii), the step ($\delta$) of inspecting a power spectrum which is obtained by analyzing layer (i) on the organic resin substrate by reflectance spectroscopy, Fourier transforming the reflected wave spectrum with respect to wave number, and plotting amplitude versus length dimension.

## ADVANTAGEOUS EFFECTS OF THE INVENTION

The invention provides a laminate comprising an organic resin substrate, and a single-layered active energy ray-curable resin layer and an inorganic deposition layer formed on the substrate, and having excellent weather resistance and adhesion, and a method for preparing the same.
Specifically, a power spectrum obtained by Fourier transforming reflected waves of a two-layer structure comprising an active energy ray-curable resin formed on an organic resin substrate with respect to wave number is used as an indicator. Then a laminate having excellent weather resistance and adhesion can be designed.
The laminate of the invention may be prepared in an industrially acceptable way because heat curing is not required. The laminate undergoes little or no delamination even under the service conditions which can cause delamination between a heat-curable acrylic resin layer and a heat-curable silicone resin layer. Thus, the laminate may be advantageously used, for example, as vehicle headlamp covers, protective films for outdoor liquid crystal displays, construction materials for carports, sunroofs or the like, parts for transport vehicles such as motorcycle windshields or windows for bullet trains or construction machineries, vehicle glazing, protective films for solar panel collectors.

## BRIEF DESCRIPTION OF DRAWINGS

FIG. 1 depicts parameters defined in the invention.
FIG. 2 shows the results of Fourier transform in Example 1.
FIG. 3 shows the results of Fourier transform in Example 3.
FIG. 4 shows the results of Fourier transform in Example 7.

FIG. 5 shows the results of Fourier transform in Example 13.
FIG. 6 shows the results of Fourier transform in Comparative Example 1.
FIG. 7 shows the results of Fourier transform in Comparative Example 4.
FIG. 8 shows the results of Fourier transform in Comparative Example 8.

## DESCRIPTION OF EMBODIMENTS

The invention is described in detail below.

The invention provides a laminate comprising an organic resin substrate, and (i) a single-layered active energy ray-curable resin layer and (ii) an inorganic deposition layer disposed on the substrate in the described order. A power spectrum is obtained by analyzing layer (i) on the organic resin substrate by reflectance spectroscopy, Fourier transforming the reflected wave spectrum with respect to wave number, and plotting amplitude versus length dimension. The power spectrum has a first maximum value $S_1$ and a second maximum value $S_2$ at lengths $L_1$ and $L_2$ which are equal to or greater than a threshold $L_0$ in length dimension, respectively. In a domain of the power spectrum which is defined by excluding the threshold $L_0$ and less, provided that the threshold $L_0$ is an arbitrary value of $1\times10^{-6}$ to $3\times10^{-6}$ m (e.g. $2\times10^{-6}$ m), the first maximum value $S_1$ at $L_1$ shows a signal $S_1$ to noise N ratio ($S_1$/N) of at least 5, and the second maximum value $S_2$ at $L_2$ shows a signal $S_2$ to noise N ratio ($S_2$/N) of at least 2.

The laminate of the invention comprises single-layered layer (i) composed of an active energy ray-curable coating composition and layer (ii) deposited on at least one surface of the organic resin substrate in the described order. The laminate may also be structured as comprising layer (i) and layer (ii) deposited on both surfaces of the organic resin substrate, or comprising layer (i) and layer (ii) deposited on one surface of the organic resin substrate and another layer deposited on the other surface.

The organic resin of which the substrate is made is not particularly limited. It is preferably at least one resin selected from a polycarbonate resin, acrylic resin, epoxy resin, ABS resin, PET resin, PP resin, PE resin, POM resin, and silicone resin, with the polycarbonate resin being more preferred.

As used herein, the parameters $L_0$, $L_1$, $L_2$, N, $S_1$, and $S_2$ are all defined in a space defined by Fourier transform of a reflected wave spectrum of layer (i) formed on the organic resin substrate.

Reference is first made to the reflected wave spectrum which is the premise for Fourier transform.

The reflected wave spectrum is obtained by recording a reflectance of a film by a spectrophotometer. The reflectance is preferably measured within a range where target layer (i) does not absorb light. Specifically, the reflectance spectrum is preferably measured within a range of 300 to 10,000 nm, and more preferably within a range of 300 to 5,000 nm.

The abscissa axis of the reflectance spectrum thus obtained is preferably converted to wave number prior to Fourier transform. By converting the abscissa axis to wave number, the wavelength dependence of the reflectance spectrum is eliminated. A periodic function depending only on a film state is obtained.

The wave number has an inverse dimension to length. Since the dimension of the original function is inverted by Fourier transform, the Fourier transform of wave number gives the dimension of length. This facilitates data interpretation after Fourier transform.

After the unit of the abscissa axis is converted to wave number, the reflected wave spectrum is Fourier transformed.

In the Fourier transform, numerical analysis methods such as discrete Fourier transform, fast Fourier transform, and Fourier numerical integration can be used.

Sometimes data points cease to be of equal width depending on a particular method such as photodiode arrays or diffraction gratings, or through the course of conversion to wave number. Data points of unequal widths may be interpolated. The interpolation may be performed by, for example, linear interpolation, secondary interpolation, Lagrange interpolation, and a spline function. The data points after equal-width interpolation may be preferable because they are readily applicable to fast Fourier transform or discrete Fourier transform.

A basic method of Fourier transform is described below.

A reflected wave spectrum f(k) expressed on the wave number abscissa axis and S(n·L) as a variable parameter in the invention may be represented by the Fourier transform like the following equation (1).

[Math. 1]

$$S(n \cdot L) = \int_{-\infty}^{\infty} f(k)\, e^{-4\pi i k n L}\, dk \qquad (1)$$

Herein, the variable k is a wave number, n is a refractive index, L is length dimension, i is the imaginary unit, π is the circle ratio, and S(n·L) is a signal after Fourier transform. When reflected wave spectrum f(k) is defined as

continuous function and in an infinite domain, equation (1) can be used as such. In actual measurement, however, f(k) is a discontinuous data set and the domain of definition is not infinite.

Thus, the discrete Fourier transform is generally used. The discrete Fourier transform used herein may be represented by the following equation (2).

[Math. 2]

$$S(n \cdot L) = \sum_{j=1}^{N} f(k_j) e^{-4\pi i k_j n L} \Delta k_j \qquad (2)$$

Herein, $k_j$ is a wave number which increases in the order of j, and $\Delta k_j$ is a sampling interval, which may be defined by the equation (3).

[Math. 3]

$$\Delta k_j = k_{j+1} - k_j \text{ , provided } \Delta k_N = \Delta k_{N-1} \qquad (3)$$

Practically, n may be a function of L. However, n·L is preferably treated as one term in numerical computation. The length dimension L used herein may be defined as the computed value of n·L divided by n when n is regarded as a constant. In necessary, constraints may be used to separate the variables of n·L and n be solved in terms of L. However, this solution is no longer referred to herein because it is different from the space of S(L) to be managed herein.

For the Fourier transform described above, a program may be designed on the basis of the above-described principle while a commercially available Fourier transform program or an FFT analyzer may be used.

Since S(n·L) is a complex function, it cannot be directly plotted on a real space. Thus, an amplitude is preferably expressed by coefficient conversion of real and imaginary parts.

Setting of an amplitude on the ordinate axis helps understanding in practice. However, the ordinate axis need not forcedly represent an amplitude because an energy equivalent space can be extended from another parameter rather than amplitude owing to the Plancherel theorem. When the ordinate axis represents a parameter other than amplitude, the parameter is preferably reformulated using a ratio integrated so as to be equivalent to the case where the ordinate axis represents an amplitude.

When the fast Fourier transform is used, a two-sided power spectrum which is bilaterally symmetrical about a regression point is obtained. However, a one-sided power spectrum should be used in the invention rather than the two-sided power spectrum. A domain of definition of the power spectrum in the invention is a domain of one-sided power spectrum excluding a domain smaller than the threshold $L_0$ to be described below.

When a reflected wave spectrum is Fourier transformed under the above-described conditions, a power spectrum as outlined in FIG. 1 is obtainable.

Next, the parameters $L_0$, $L_1$, $L_2$, N, $S_1$, and $S_2$ defined herein are described in detail.

$L_0$ is a threshold in length dimension L. Generally stated, in Fourier transform, when the original function is compressed, a transformation function is elongated, and when the original function is elongated, a transformation function is compressed. The $\delta$ function is a remarkable example of such function. This means that in order to obtain a power spectrum which is accurate in a region around the origin in length dimension L, data should be collected over a longer period in the original function. While the original function is a reflected wave spectrum in the invention, an indefinitely long-period original function cannot be obtained because of restrictions like light absorption properties of layer (i) and properties of a spectroscope. In addition, signals derived from a sampling cycle of the original function develop in a region around the origin in length dimension L. Furthermore, signals derived from irregularities of the outermost surface may be additionally included. Accordingly, since it is unfavorable for physical and mathematical reasons to treat signals around the origin as valid, the threshold $L_0$ should be set and those signals in a smaller domain than $L_0$ be neglected.

Herein $L_0$ is $1\times10^{-6}$ to $3\times10^{-6}$ m, preferably $1.5\times10^{-6}$ to $2.5\times10^{-6}$ m, and most preferably $2\times10^{-6}$ m. As long as $L_0$ is in the range, the invention is not substantially affected thereby.

$L_1$ and $S_1$ relate to the highest amplitude signal. $S_1$ refers to the highest amplitude signal which shows the maximum intensity (the first maximum) in a domain of definition of the power spectrum excluding a domain smaller than the threshold $L_0$. $L_1$ is a value in length dimension L at which signal $S_1$ appears.

$S_1$ has a signal $S_1$ to noise N ratio ($S_1$/N) of at least 5, preferably at least 10, more preferably at least 15, and even more preferably at least 20. The noise N will be described later. When the $S_1$/N ratio is less than 5, measurement errors are significant and the desired effect of the invention is not exerted. The upper limit of $S_1$/N ratio is not particularly determined. Since $L_1$ is a parameter relating to length dimension L, it has a specific length. $L_1$ may have a value of $3\times10^{-6}$ to $3\times10^{-5}$ m, and is preferably $5\times10^{-6}$ to $2\times10^{-5}$ m, and more preferably $8\times10^{-6}$ to $1.5\times10^{-5}$ m. If $L_1$ is less

than $5\times10^{-6}$ m, the layer (ii) in the laminate may be thermally degraded. If $L_1$ is more than $2\times10^{-5}$ m, the layer (ii) in the laminate may crack or break.

$L_2$ and $S_2$ relate to the second highest amplitude signal. $S_2$ refers to the second highest amplitude signal (the second maximum) which shows an intensity just below that of $S_1$ in a domain of definition of a power spectrum excluding a domain smaller than the threshold $L_0$. $L_2$ is a value in length dimension L at which signal $S_2$ appears. $S_2$ has a signal $S_2$ to noise N ratio ($S_2$/N) of at least 2, preferably at least 2.5, and more preferably at least 3. If $S_2$/N ratio is less than 2, the difference between $S_2$ and the noise is indefinite and a false signal can be identified as $S_2$. The upper limit of $S_2$/N ratio is not particularly determined, but is smaller than $S_1$/N ratio with the same noise N, as understood from the terminology. If $S_2$/N ratio is greater than $S_1$/N ratio, $S_2$ and $S_1$ should be redefined as the highest amplitude signal and the second highest amplitude signal, respectively. Since $L_2$ is a parameter relating to length dimension L, it has a specific length. $L_2$ may have a value in the range of $0.5L_1$ to $2.0L_1$, and is preferably in the range of $1.0L_1 < L_2 \leq 1.5L_1$.

The noise N may be white noise, colored noise or the like. The noise N may be defined by a statistical or mathematical method.

When the noise N is white noise, it may be defined by a simple method as described below. That is, the upper limit is defined by a value of a signal having the third highest intensity just below that of $S_2$ and the lower limit is defined by a value of a signal having the lowest intensity. The noise N may be defined herein by a value obtained by subtracting the value of the lower limit from the value of the upper limit.

When the noise N is colored noise, it may be obtained by creating a baseline by regression analysis or visual observation, translating the baseline while maintaining its slope or curvature, and defining the upper limit and the lower limit as described above for white noise.

Generally, white noise develops more frequently than colored noise under the measurement conditions according to the invention.

If a shortage of signal/noise ratio is caused by the measurement conditions, remeasurement in a vibration-free environment, increasing the number of data points, and setting of an appropriate window function for the original function may be effective.

$S_2$ is preferably $0.05S_1$ to $0.95S_1$, and more preferably $0.1S_1$ to $0.9S_1$.

The layer (i) in the laminate of the invention is a single-layered resin layer composed of an active energy ray-curable coating composition.

The active energy ray-curable coating composition preferably comprises (A) a silicate oligomer having the general formula (1) and (B) a bifunctional (meth)acrylate having the general formula (2).

[Chem. 5]

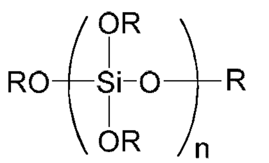 (1)

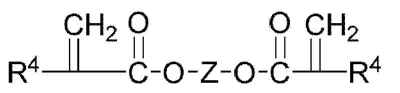 (2)

In formula (1), R is $R^1$ or $R^2$, $R^1$ is a $C_1$-$C_4$ alkyl group, $R^2$ is a substituent having the general formula (3) shown below, a molar ratio ($R^1/R^2$) of $R^1$ to $R^2$ in all R is from 0 to 10, and n is an integer of 1 to 10.

In formula (2), Z is a divalent organic group containing a $C_4$-$C_{20}$ straight, branched, or cyclic saturated hydrocarbon, and $R^4$ is each independently hydrogen or methyl.

[Chem. 6]

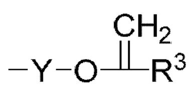 (3)

In formula (3), Y is a $C_2$-$C_{10}$ straight alkylene group, and $R^3$ is hydrogen or methyl.

The silicate oligomer (A) having formula (1) may be prepared, for example, by reacting a silicate with at least 1 molar equivalent of a ω-functional (meth)acrylate alkylene alcohol.

Examples of the silicate include tetraalkoxysilanes such as tetramethoxysilane and tetraethoxysilane, and silicate oligomers such as Methyl Silicate 51, Methyl Silicate 53A, Ethyl Silicate 40, and Ethyl Silicate 48 (trade name by Colcoat Co., Ltd.), and X-40-2308 (trade name by Shin-Etsu Chemical Co., Ltd.).

Examples of the ω-functional (meth)acrylate alkylene alcohol include hydroxymethyl acrylate, hydroxyethyl

acrylate, hydroxypropyl acrylate, hydroxybutyl acrylate, and hydroxyoctyl acrylate.

In formula (1), the $C_1$-$C_4$ alkyl groups may be straight, branched or cyclic and include, for example, methyl, ethyl, propyl, isopropyl, butyl, isobutyl, and tert-butyl.

Of these, $R^1$ preferably contains at least one methyl. Where a plurality of $R^1$ are included, it is more preferred that all $R^1$ be methyl.

In formula (3), examples of the $C_2$-$C_{10}$ straight alkylene group include ethylene, trimethylene, tetramethylene, pentamethylene, hexamethylene, heptamethylene, octamethylene, nonamethylene, and decamethylene.

Of these, Y is preferably ethylene.

$R^3$ is hydrogen or methyl, with hydrogen being preferred.

In formula (1), the molar ratio ($R^1/R^2$) of $R^1$ to $R^2$ in all R is from 0 to 10. This ratio may be controlled by adjusting the equivalent amount of the ω-functional (meth)acrylate alkylene alcohol for reaction as described in conjunction with the synthesis of silicate oligomer (A). The equivalent amount may be determined with reference to the molecular weight measurement of the reactant, silicate by GPC.

In formula (2), examples of the divalent organic group containing a $C_4$-$C_{20}$ straight, branched, or cyclic saturated hydrocarbon include straight alkylenes such as tetramethylene, pentamethylene, hexamethylene, heptamethylene, octamethylene, nonamethylene, decamethylene, undecamethylene, dodecamethylene, and tridecamethylene; branched alkylenes such as neopentylene, 3-methyl-1,5-pentylene, and 2-ethyl-1,6-hexylene; and divalent organic groups containing a cyclic saturated hydrocarbon group such as 1,4-cyclohexylene, bis(methylidene)tricyclodecane, or decalylene.

Of these, Z is preferably hexamethylene, nonamethylene or neopentylene, with hexamethylene being more preferred.

$R^4$ is a hydrogen atom or methyl group.

Besides components (A) and (B) described above, the active energy ray-curable coating composition may contain other components insofar as layer (i) meets the parameters as defined herein.

Such other components include, for example, (P) a UV absorber, (Q) a vinyl polymer, (R) an acrylate other than component (B), (S) a nanoparticulate inorganic oxide such as titanium oxide or silicon oxide, (T) a solvent, and (U) a photo-radical initiator.

Examples of the UV absorber (P) include benzotriazoles, benzophenones, resorcinols, and triazines having a vinyl polymerizable group.

Illustrative examples include (meth)acrylic monomers having a UV absorbing group in the molecule, specifically benzotriazole compounds having the general formula (IX) and benzophenone compounds having the general formula (X) shown below.

[Chem. 7]

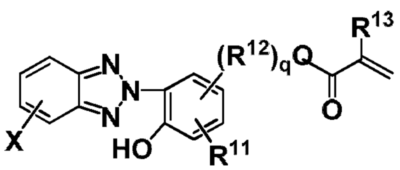

(IX)

Herein X is hydrogen or chlorine, $R^{11}$ is hydrogen, methyl or a $C_4$-$C_8$ tertiary alkyl group, $R^{12}$ is a straight or branched $C_2$-$C_{10}$ alkylene group, $R^{13}$ is hydrogen or methyl, and q is 0 or 1.

[Chem. 8]

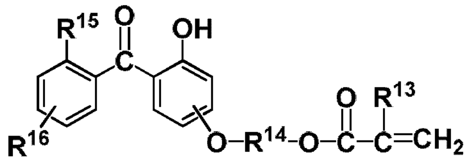

(X)

Herein $R^{13}$ is as defined above, $R^{14}$ is a substituted or unsubstituted straight or branched $C_2$-$C_{10}$ alkylene group, $R^{15}$ is hydrogen or hydroxyl, and $R^{16}$ is hydrogen, hydroxyl or a $C_1$-$C_6$ alkoxy group.

In formula (IX), examples of the $C_4$-$C_8$ tertiary alkyl group include tert-butyl, tert-pentyl, tert-hexyl, tert-heptyl,

tert-octyl and di-tert-octyl.

Examples of the straight or branched $C_2$-$C_{10}$ alkylene group include ethylene, trimethylene, propylene, tetramethylene, 1,1-dimethyltetramethylene, butylene, octylene, and decylene.

In formula (X), examples of the straight or branched $C_2$-$C_{10}$ alkylene group include those exemplified above for $R^{12}$ and such groups in which some hydrogen is substituted by halogen.

Examples of the $C_1$-$C_6$ alkoxy group include methoxy, ethoxy, propoxy, and butoxy.

Examples of the benzotriazole compound having formula (IX) include 2-(2' -hydroxy-5' -(meth)acryloxyphenyl)-2H-benzotriazole, 2-(2' -hydroxy-3' -tert-butyl-5' -(meth)acryloxymethylphenyl)-2H-benzotriazole, 2-[2'-hydroxy-5'-(2-(meth)acryloxyethyl)phenyl]-2H-benzotriazole, 2-[2'-hydroxy-3'-tert-butyl-5'-(2-(meth)acryloxyethyl)phenyl]-5-chloro-2H-benzotriazole, and 2-[2'-hydroxy-3'-methyl-5'-(8-(meth)acryloxyoctyl)phenyl]-2H-benzotriazole.

Examples of the benzophenone compound having formula (X) include 2-hydroxy-4-(2-(meth)acryloxyethoxy)benzophenone, 2-hydroxy-4-(4-(meth)acryloxybutoxy)benzophenone, 2,2'-dihydroxy-4-(2-(meth)acryloxyethoxy)benzophenone, 2,4-dihydroxy-4'-(2-(meth)acryloxyethoxy)benzophenone, 2,2',4-trihydroxy-4'-(2-(meth)acryloxyethoxy)benzophenone, 2-hydroxy-4-(3-(meth)acryloxy-2-hydroxypropoxy)benzophenone, and 2-hydroxy-4-(3-(meth)acryloxy-1-hydroxypropoxy)benzophenone.

As the UV-absorbing vinyl monomer, benzotriazole compounds having formula (IX) are preferred. Inter alia, 2-[2'-hydroxy-5'-(2-(meth)acryloxyethyl)phenyl]-2H-benzotriazole is more preferred.

The UV-absorbing vinyl monomer may be used alone or in admixture of two or more.

Although the vinyl polymer (Q) is not particularly limited, vinyl polymers having the general formula (VIII) are exemplary.

$$\text{poly-}[(D)_d\text{-co-}(E)_e\text{-co-}(F)_f] \qquad \text{(VIII)}$$

Herein D, E, and F are each independently a vinyl monomer unit, the brackets and "co-" designate a random copolymer, d, e, and f each are a molar fraction, D is a vinyl monomer having an alkoxysilyl group, d is such a molar fraction that monomer D is 1 to 50% by weight of the entire polymer, E is a UV-absorbing vinyl monomer, e is such a molar fraction that monomer E is 5 to 40% by weight of the entire polymer, F is another monomer copolymerizable with the vinyl monomers, and f is such a molar fraction that monomer F is [100 - (monomer D content) - (monomer E content)]% by weight of the entire polymer.

The vinyl monomer unit D is preferably formed by addition polymerization of a vinyl monomer having an alkoxysilyl group.

Exemplary of the vinyl monomer having an alkoxysilyl group is at least one monomer selected from the group consisting of: (meth)acryloyloxyalkylenealkoxysilanes such as acryloyloxymethyltrimethoxysilane, acryloyloxymethyldimethoxymethylsilane, acryloyloxymethylmethoxydimethylsilane, methacryloyloxymethyltrimethoxysilane, methacryloyloxymethyldimethoxymethylsilane, methacryloyloxymethylmethoxydimethylsilane, 2-acryloyloxyethyltrimethoxysilane, 2-acryloyloxyethyldimethoxymethylsilane, 2-acryloyloxyethylmethoxydimethylsilane, 2-methacryloyloxyethyltrimethoxysilane, 2-methacryloyloxyethyldimethoxymethylsilane, 2-methacryloyloxyethylmethoxydimethylsilane, 3-acryloyloxypropyltrimethoxysilane, 3-acryloyloxypropyldimethoxymethylsilane, 3-acryloyloxypropylmethoxydimethylsilane, 3-methacryloyloxypropyltrimethoxysilane, 3-methacryloyloxypropyldimethoxymethylsilane, 3-methacryloyloxypropylmethoxydimethylsilane, 8-acryloyloxyoctyltrimethoxysilane, 8-methacryloyloxyoctyltrimethoxysilane, acryloyloxymethyltriethoxysilane, acryloyloxymethyldiethoxymethylsilane, acryloyloxymethylethoxydimethylsilane, methacryloyloxymethyltriethoxysilane, methacryloyloxymethyldiethoxymethylsilane, methacryloyloxymethylethoxydimethylsilane, 2-acryloyloxyethyltriethoxysilane, 2-acryloyloxyethyldiethoxymethylsilane, 2-acryloyloxyethylethoxydimethylsilane, 2-methacryloyloxyethyltriethoxysilane, 2-methacryloyloxyethyldiethoxymethylsilane, 2-methacryloyloxyethylethoxydimethylsilane, 3-acryloyloxypropyltriethoxysilane, 3-acryloyloxypropyldiethoxymethylsilane, 3-acryloyloxypropylethoxydimethylsilane, 3-methacryloyloxypropyltriethoxysilane, 3-methacryloyloxypropyldiethoxymethylsilane, 3-methacryloyloxypropylethoxydimethylsilane, 8-acryloyloxyoctyltriethoxysilane, 8-methacryloyloxyoctyltriethoxysilane; straight and/or branched alkenylalkoxysilanes such as vinyltrimethoxysilane, vinyldimethoxymethylsilane, vinylmethoxydimethylsilane, allyltrimethoxysilane, allyldimethoxymethylsilane, allylmethoxydimethylsilane, methallyltrimethoxysilane, methallyldimethoxymethylsilane, methallylmethoxydimethylsilane, 4-trimethoxysilyl-1-butene, 5-trimethoxysilyl-1-pentene, 6-trimethoxysilyl-1-hexene, 7-trimethoxysilyl-1-heptene, 8-trimethoxysilyl-1-octene; and aromatic unsaturated alkoxysilanes such as p-trimethoxysilylstyrene, 1,4-divinyl-2-trimethoxysilylbenzene, p-trimethoxysilyl-$\alpha$-methylstyrene. Of these, 3-methacryloyloxypropyltrimethoxysilane (e.g. trade name KBM-503 from Shin-Etsu Chemical Co., Ltd.) is preferred from the aspects of availability and reactivity.

The vinyl monomer unit D may be copolymerized with other monomer units E and F in such a molar fraction d that unit D is 1 to 50% by weight, preferably 2 to 40% by weight, more preferably 5 to 35% by weight based on the total weight of polymer (VIII). A vinyl monomer unit D content of less than 1% by weight based on the total weight of the polymer may prevent the polymer from forming a network with the inorganic nanoparticulate component whereas a unit

D content in excess of 50% by weight may lead to a lowering of shelf stability and weather resistance.

The vinyl monomer unit E is preferably formed by addition polymerization of a vinyl monomer having a UV-absorbing group. Any vinyl monomer having a UV-absorbing group may be used as long as it has a UV-absorbing group and a vinyl polymerizable group. As used herein, UV (ultraviolet) refers to radiation with wavelength of the order of 200 to 400 nm. Examples of the UV-absorbing group include organic groups having benzotriazoles, benzophenones, resorcinols and triazines. Examples of the vinyl polymerizable group include organic groups having vinyl, allyl, styryl, acrylic and methacrylic groups.

Examples of the vinyl monomer having an organic UV-absorbing group include (meth)acrylic monomers having a UV-absorbing group in the molecule. Illustrative examples include benzotriazole compounds having the general formula (IX) and benzophenone compounds having the general formula (X), defined above, and exemplary compounds encompassed therein. These compounds may be used alone or in admixture of two or more.

Inter alia, benzotriazole compounds having formula (IX) are preferred. Inter alia, 2-[2'-hydroxy-5'-(2-(meth)acryloxyethyl)phenyl]-2H-benzotriazole is more preferred.

The vinyl monomer unit E may be copolymerized with other monomer units D and F in such a molar fraction e that unit E is 5 to 40% by weight, preferably 5 to 30% by weight, more preferably 8 to 25% by weight based on the total weight of polymer (VIII). A vinyl monomer unit E content of less than 5% by weight based on the total weight of the polymer may lead to poor weather resistance whereas a unit E content in excess of 40% by weight may lead to poor adhesion to the substrate.

The other vinyl monomer unit F which is copolymerizable with the foregoing vinyl monomer units D and E is not particularly limited as long as it is a copolymerizable monomer. Examples include (meth)acrylic monomers having a cyclic hindered amine structure, (meth)acrylates, (meth)acrylonitriles, (meth)acrylamides, alkyl vinyl ethers, alkyl vinyl esters, styrene, and derivatives thereof.

Examples of the (meth)acrylic monomer having a cyclic hindered amine structure include 2,2,6,6-tetramethyl-4-piperidinyl methacrylate and 1,2,2,6,6-pentamethyl-4-piperidinyl methacrylate.

Examples of the (meth)acrylate and derivative thereof include (meth)acrylates of monohydric alcohols such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, n-pentyl (meth)acrylate, isopentyl (meth)acrylate, n-hexyl (meth)acrylate, isohexyl (meth)acrylate, n-heptyl (meth)acrylate, isoheptyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-undecyl (meth)acrylate, n-dodecyl (meth)acrylate, lauryl (meth)acrylate, palmityl (meth)acrylate, stearyl (meth)acrylate, cyclohexyl (meth)acrylate, 4-methylcyclohexyl (meth)acrylate, 4-tert-butylcyclohexyl (meth)acrylate, isobornyl (meth)acrylate, dicyclopentanyl (meth)acrylate, dicyclopentenyloxyethyl (meth)acrylate, benzyl (meth)acrylate; (meth)acrylates of alkoxy(poly)alkylene glycols such as 2-methoxyethyl (meth)acrylate, 2-methoxypropyl (meth)acrylate, 3-methoxypropyl (meth)acrylate, 2-methoxybutyl (meth)acrylate, 3-methoxybutyl (meth)acrylate, 4-methoxybutyl (meth)acrylate, methoxypolyethylene glycol (meth)acrylate (the number of ethylene glycol units is 2 to 20, for example), and methoxypolypropylene glycol (meth)acrylate (the number of propylene glycol units is 2 to 20, for example); mono(meth)acrylates of polyhydric alcohols such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, glycerol mono(meth)acrylate, pentaerythritol mono(meth)acrylate, polyethylene glycol mono(meth)acrylate (the number of ethylene glycol units is 2 to 20, for example), polypropylene glycol mono(meth)acrylate (the number of propylene glycol units is 2 to 20, for example); poly(meth)acrylates of polyhydric alcohols such as ethylene glycol di(meth)acrylate, propylene glycol di(meth)acrylate, butylene glycol di(meth)acrylate, glycerol di(meth)acrylate, glycerol tri(meth)acrylate, pentaerythritol di(meth)acrylate, pentaerythritol tetra(meth)acrylate, 1,4-cyclohexanediol di(meth)acrylate, polyethylene glycol di(meth)acrylate (the number of ethylene glycol units is 2 to 20, for example), and polypropylene glycol di(meth)acrylate (the number of propylene glycol units is 2 to 20, for example); (poly)esters of hydroxyalkyl (meth)acrylates with non-polymerizable polybasic acids such as mono[2-(meth)acryloyloxyethyl] succinate, di[2-(meth)acryloyloxyethyl] succinate, mono[2-(meth)acryloyloxyethyl] adipate, di[2-(meth)acryloyloxyethyl] adipate, mono[2-(meth)acryloyloxyethyl] phthalate, di[2-(meth)acryloyloxyethyl] phthalate; amino-containing (meth)acrylates such as 2-aminoethyl (meth)acrylate, 2-(N-methylamino)ethyl (meth)acrylate, 2-(N,N-dimethylamino)ethyl (meth)acrylate, 2-(N-ethylamino)ethyl (meth)acrylate, 2-(N,N-diethylamino)ethyl (meth)acrylate, 3-(N,N-dimethylamino)propyl (meth)acrylate, and 4-(N,N-dimethylamino)butyl; and epoxy-containing (meth)acrylates such as glycidyl (meth)acrylate.

Examples of the (meth)acrylonitrile derivative include α-chloroacrylonitrile, α-chloromethylacrylonitrile, α-trifluoromethylacrylonitrile, α-methoxyacrylonitrile, α-ethoxyacrylonitrile, and vinylidene cyanide.

Examples of the (meth)acrylamide derivative include N-methyl(meth)acrylamide, N,N-dimethyl(meth)acrylamide, N-ethyl(meth)acrylamide, N,N-diethyl(meth)acrylamide, N-methoxy(meth)acrylamide, N,N-dimethoxy(meth)acrylamide, N-ethoxy(meth)acrylamide, N,N-diethoxy(meth)acrylamide, diacetone(meth)acrylamide, N-methylol(meth)acrylamide, N-(2-hydroxyethyl)(meth)acrylamide, N,N-dimethylaminomethyl(meth)acrylamide, N-(2-dimethylamino)ethyl(meth)acrylamide, N,N'-methylenebis(meth)acrylamide, and N,N'-ethylenebis(meth)acrylamide.

Examples of the alkyl vinyl ether include methyl vinyl ether, ethyl vinyl ether, butyl vinyl ether, and hexyl vinyl ether.

Examples of the alkyl vinyl ester include vinyl formate, vinyl acetate, vinyl acrylate, vinyl butyrate, vinyl caproate, and vinyl stearate.

Examples of styrene and derivative thereof include styrene, $\alpha$-methylstyrene, and vinyltoluene.

Of these monomers, (meth)acrylates are preferred. More preferred are methyl (meth)acrylate, ethyl (meth)acrylate, isopropyl (meth)acrylate, n-butyl (meth)acrylate, isobutyl (meth)acrylate, n-hexyl (meth)acrylate, 2-ethylhexyl (meth)acrylate, isononyl (meth)acrylate, lauryl (meth)acrylate, cyclohexyl (meth)acrylate, 4-methylcyclohexyl (meth)acrylate, 4-tert-butylcyclohexyl (meth)acrylate, isobornyl (meth)acrylate, dicyclopentanyl (meth)acrylate, and dicyclopentenyloxyethyl (meth)acrylate.

For the vinyl monomer unit C, the foregoing monomers may be used alone or in admixture of two or more.

The vinyl monomer unit F may be copolymerized with other monomer units D and E in such a molar fraction f that unit F is [100 - (monomer D content) - (monomer E content)]% by weight based on the total weight of polymer (VIII), specifically 10 to 94% by weight, preferably 20 to 94% by weight, more preferably 35 to 90% by weight. A vinyl monomer unit F content of less than 10% by weight based on the total weight of the polymer may cause defects to the coating appearance whereas a unit F content in excess of 94% by weight may lead to a shortage of crosslinking with inorganic nanoparticles and hence, a lowering of durability.

Component (Q) is preferably obtained from copolymerization reaction of vinyl monomer units D, E, and F. The copolymerization reaction may be carried out by providing a solution containing these monomers, adding thereto a radical polymerization initiator selected from peroxides such as dicumyl peroxide and benzoyl peroxide, and azo compounds such as azobisisobutyronitrile, and heating at 50 to 150°C, especially 70 to 120°C for 1 to 10 hours, especially 3 to 8 hours.

Component (Q) has a weight average molecular weight (Mw) of preferably 1,000 to 300,000, more preferably 5,000 to 250,000, as measured by gel permeation chromatography (GPC) versus polystyrene standards although the Mw is not limited thereto. A polymer with a too high Mw may be difficult to synthesize or to handle due to an excessive increase of viscosity, whereas a polymer with a too low Mw may cause outer appearance defects such as whitening and weathering cracks of a film or shortages of adhesion, durability and weather resistance.

As component (Q), either polymers prepared using the foregoing ingredients or commercially available products may be used. Suitable commercially available products include Newcoat UVA-101, 102, 103, 104, Vanaresin UVA-5080, 55T, 55MHB, 7075, 73T (trade name by Shin-Nakamura Chemical Co., Ltd.).

The acrylic polymer as component (Q) may be a polycarbonate and/or polyester base urethane-modified vinyl polymer. The polycarbonate and/or polyester base urethane-modified vinyl polymer functions as an adhesion improver and specifically, undergoes layer separation from other components in a cured film to establish a graded concentration in thickness direction of the film, for thereby increasing affinity to the organic resin substrate without degrading antimarring performance, whereby tight adhesion is exerted.

The polycarbonate and/or polyester base urethane-modified vinyl polymer is obtained by grafting a polycarbonate or polyester base polyurethane to a vinyl polymer. Specifically the polymer is preferably a vinyl polymer having on side chain a polycarbonate or polyester base polyurethane obtained from reaction of an aliphatic polycarbonate diol or aliphatic polyester diol with an aromatic diisocyanate, more preferably a vinyl polymer having on side chain a polycarbonate base urethane obtained from reaction of an aliphatic polycarbonate diol with an aromatic diisocyanate.

Examples of the aliphatic polycarbonate diol include diols of 1,4-tetramethylene, 1,5-pentamethylene, 1,6-hexamethylene, 1,12-dodecane, and 1,4-cyclohexane types and mixtures thereof. Examples of the aromatic diisocyanate include 4,4'-diphenylmethane diisocyanate, tolylene-2,4-diisocyanate, tolylene-2,6-diisocyanate, m-xylene diisocyanate, naphthalene diisocyanate, and mixtures thereof. The polycarbonate base polyurethane is obtainable by reacting these reactants in the standard manner.

Any monomer may be used as the monomer of which the vinyl polymer is composed as long as it contains a vinyl polymerizable group. Examples include methyl (meth)acrylate, ethyl (meth)acrylate, butyl (meth)acrylate, cyclohexyl (meth)acrylate, glycidyl (meth)acrylate, 2-hydroxyethyl (meth)acrylate, (meth)acrylic acid, styrene, and vinyl acetate.

The vinyl polymers are obtained by polymerizing such monomers according to the well-known method.

The urethane-modified vinyl polymer preferably takes the form of a solution in an organic solvent in view of ease of synthesis and ease of handling.

The organic solvent used herein is not particularly limited as long as the polycarbonate and/or polyester base urethane-modified vinyl polymer component is fully soluble therein and it has a relatively high polarity. Examples include alcohols such as isopropyl alcohol, n-butanol, isobutanol, tert-butanol, diacetone alcohol; ketones such as methyl ethyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as ethyl acetate, propyl acetate,

butyl acetate, and cyclohexyl acetate, which may be used alone or in admixture of two or more.

The polycarbonate and/or polyester base urethane-modified vinyl polymer preferably has a Mw of 5,000 to 50,000, more preferably 7,000 to 40,000 as measured by GPC versus polystyrene standards. A polymer with a Mw of less than 5,000 may fail to achieve sufficient adhesion to the organic resin substrate. If the Mw exceeds 50,000, there are risks including a lowering of solubility in the composition, separation from the composition, and a loss of transparency of a cured film.

The polycarbonate and/or polyester base urethane-modified vinyl polymer preferably has a hydroxyl number of at least 10, more preferably in the range of 20 to 100, based on the solids in the component. If the component has a hydroxyl number of less than 10 on solid basis, there are risks of the component lowering its solubility in the composition and separating therefrom.

Commercial products may be used as the polycarbonate and/or polyester base urethane-modified vinyl polymer component. Suitable products include, for example, Acrit 8UA-347, 357, 366 (polycarbonate base), Acrit 140, 146, 301 and 318 (polyester base) by Taisei Fine Chemical Co., Ltd.

The acrylate (R) encompasses acrylates other than the aforementioned substance (B). Examples include, but are not limited to, monoesters such as methyl methacrylate (abbr. MMA), methyl acrylate (abbr. MA), ethyl methacrylate, ethyl acrylate, hydroxyethyl acrylate (abbr. HEA), hydroxyethyl methacrylate (abbr. HEMA), hydroxypropyl acrylate, 4-hydroxybutyl acrylate, isobutyl acrylate, tert-butyl acrylate, n-octyl acrylate, isooctyl acrylate, isononyl acrylate, lauryl acrylate, stearyl acrylate, isostearyl acrylate, isonorbornyl acrylate, tetrahydrofurfuryl acrylate, methoxyethyl acrylate, methoxypolyethylene glycol acrylate, 2-methyl-2-ethyl-1,3-dioxolan-4-yl acrylate, [cyclohexanespiro-2-(1,3-dioxolan-4-yl)]methyl acrylate, (3-ethyloxetan-3-yl)methyl acrylate; polyfunctional esters such as glycerol triacrylate, trimethylolpropane triacrylate, pentaerythritol triacrylate, dipentaerythritol triacrylate, ethoxylated isocyanuric acid triacrylate, ethoxylated glycerol triacrylate, ethoxylated trimethylolpropane triacrylate, pentaerythritol tetraacrylate, dipentaerythritol hexaacrylate, ditrimethylolpropane tetraacrylate, ethoxylated pentaerythritol tetraacrylate, trimethylolpropane trimethacrylate, and trispentaerythritol octaacrylate; and polyfunctional esters, for example, basic hydrolytic condensates of (meth)acryloyloxyalkylenealkoxysilanes such as acryloyloxymethyltrimethoxysilane, acryloyloxymethyldimethoxymethylsilane, acryloyloxymethylmethoxydimethylsilane, methacryloyloxymethyltrimethoxysilane, methacryloyloxymethyldimethoxymethylsilane, methacryloyloxymethylmethoxydimethylsilane, 2-acryloyloxyethyltrimethoxysilane, 2-acryloyloxyethyldimethoxymethylsilane, 2-acryloyloxyethylmethoxydimethylsilane, 2-methacryloyloxyethyltrimethoxysilane, 2-methacryloyloxyethyldimethoxymethylsilane, 2-methacryloyloxyethylmethoxydimethylsilane, 3-acryloyloxypropyltrimethoxysilane, 3-acryloyloxypropyldimethoxymethylsilane, 3-acryloyloxypropylmethoxydimethylsilane, 3-methacryloyloxypropyltrimethoxysilane, 3-methacryloyloxypropyldimethoxymethylsilane, 3-methacryloyloxypropylmethoxydimethylsilane, 8-acryloyloxyoctyltrimethoxysilane, 8-methacryloyloxyoctyltrimethoxysilane, acryloyloxymethyltriethoxysilane, acryloyloxymethyldiethoxymethylsilane, acryloyloxymethylethoxydimethylsilane, methacryloyloxymethyltriethoxysilane, methacryloyloxymethyldiethoxymethylsilane, methacryloyloxymethylethoxydimethylsilane, 2-acryloyloxyethyltriethoxysilane, 2-acryloyloxyethyldiethoxymethylsilane, 2-acryloyloxyethylethoxydimethylsilane, 2-methacryloyloxyethyltriethoxysilane, 2-methacryloyloxyethyldiethoxymethylsilane, 2-methacryloyloxyethylethoxydimethylsilane, 3-acryloyloxypropyltriethoxysilane, 3-acryloyloxypropyldiethoxymethylsilane, 3-acryloyloxypropylethoxydimethylsilane, 3-methacryloyloxypropyltriethoxysilane, 3-methacryloyloxypropyldiethoxymethylsilane, 3-methacryloyloxypropylethoxydimethylsilane, 8-acryloyloxyoctyltriethoxysilane, and 8-methacryloyloxyoctyltriethoxysilane, which may be used alone or in admixture of two or more.

The amount of substance (B) used is preferably 3 to 50% by weight, more preferably 5 to 40% by weight, even more preferably 10 to 30% by weight based on the substance (R). If the amount of substance (B) is less than 3% by weight, the power spectrum may be split with difficulty. If the amount of substance (B) is more than 50% by weight, anomalies of outer appearance like streaks and whitening may occur during formation of layer (i).

Examples of nanoparticulate inorganic oxide (S) include at least one oxide selected from nanoparticulate inorganic oxides such as silicon oxide, zinc oxide, titanium oxide, cerium oxide, and aluminum oxide. The nanoparticulate inorganic oxide has a particle size of preferably 5 to 200 nm, more preferably 10 to 150 nm, even more preferably 15 to 100 nm. Particles of smaller than 5 nm may be liable to agglomerate whereas particles of larger than 200 nm may detract from the transparency of a coating.

Examples of solvent (T) include, but are not limited to, hydrocarbon compounds of 5 to 30 carbon atoms such as pentane, hexane, heptane, octane, nonane, decane, undecane, dodecane, tridecane, tetradecane, pentadecane, hexadecane, heptadecane, octadecane, nonadecane, icosane, eicosane, docosane, triicosane, tetraicosane, pentaicosane, hexaicosane, heptaicosane, octaicosane, nonaicosane, triacontane, benzene, toluene, o-xylene, m-xylene, p-xylene, as well as petroleum ether, kerosene, ligroin, and nujol, which are mixtures of the foregoing; mono and polyhydric alcohols such as methanol, ethanol, 1-propanol, 2-propanol, cyclopentanol, ethylene glycol, propylene glycol, β-thiadiglycol, butylene glycol, and glycerol; ethers such as diethyl ether, dipropyl ether, cyclopentyl methyl ether, ethylene glycol dimethyl ether, diethylene glycol dimethyl ether, triethylene glycol dimethyl ether, ethylene glycol monomethyl ether, ethylene glycol monoethyl ether, ethylene glycol monopropyl ether, ethylene glycol monobutyl ether, propylene glycol

monomethyl ether, propylene glycol monoethyl ether, propylene glycol monopropyl ether, propylene glycol monobutyl ether, butylene glycol monomethyl ether, butylene glycol monoethyl ether, butylene glycol monopropyl ether, butylene glycol monobutyl ether; esters such as methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, methyl benzoate, ethyl benzoate, propyl benzoate, butyl benzoate, dimethyl oxalate, diethyl oxalate, dipropyl oxalate, dibutyl oxalate, dimethyl malonate, diethyl malonate, dipropyl malonate, dibutyl malonate, ethylene glycol diformate, ethylene glycol diacetate, ethylene glycol dipropionate, ethylene glycol dibutylate, propylene glycol diacetate, propylene glycol dipropionate, propylene glycol dibutylate, ethylene glycol methyl ether acetate, propylene glycol methyl ether acetate, butylene glycol monomethyl ether acetate, ethylene glycol ethyl ether acetate, propylene glycol ethyl ether acetate, butylene glycol monoethyl ether acetate; ketones such as acetone, diacetone alcohol, diethyl ketone, methyl ethyl ketone, methyl isobutyl ketone, methyl n-butyl ketone, dibutyl ketone, cyclopentanone, cyclohexanone, cycloheptanone, cyclooctenone; and amides such as dimethylformamide, dimethylacetamide, tetraacetylethylenediamide, tetraacetylhexamethylenetetramide, N,N-dimethylhexamethylenediamine diacetate, which may be used alone or in admixture of two or more.

The photo radical initiator (U) is not particularly limited. Examples include alkylphenones such as 2,2-dimethoxy-1,2-diphenylethan-1-one, 1-hydroxycyclohexylphenylketone, 2-hydroxy-2-methyl-1-phenylpropanone, 1-[4-(2-hydroxyethoxy)phenyl]-2-hydroxy-2-methyl-1-propan-1-one, methyl phenylglyoxylate; aminoalkylphenones such as 2-methyl-1-(4-methylthiophenyl)-2-morpholinopropan-1-one, 2-benzyl-2-dimethylamino-1-(4-morpholinophenyl)butanone-1,2-(dimethylamino)-2-[(4-methylphenyl)methyl]-1-[4-(4-morpholinyl)phenyl]-1-butanone; and acyl phosphine oxides such as diphenyl(2,4,6-trimethylbenzoyl)phosphine oxide and phenylbis(2,4,6-trimethylbenzoyl)phosphine oxide.

In the active energy ray-curable coating composition, the amounts of the foregoing substance (A), substance (B), UV absorber (P), vinyl polymer (Q), acrylate (R) other than (B), nanoparticulate inorganic oxide (S), solvent (T), and photo radical initiator (U) blended are preferably 5 to 20% by weight of substance (A), 3 to 10% by weight of substance (B), 1 to 10% by weight of UV absorber (P), 1 to 10% by weight of vinyl copolymer (Q), 5 to 30% by weight of acrylate (R), 1 to 25% by weight of nanoparticulate inorganic oxide (S), 20 to 90% by weight of solvent (T), and 0.1 to 10% by weight of photo radical initiator (U).

The layer (ii) which constitutes the inventive laminate is an inorganic deposition layer as mentioned above. Preference is given to layers formed of compounds such as oxides, nitrides, and carbides of an element selected from the group consisting of silicon, boron, titanium, zirconium, and aluminum, and mixtures of these compounds. A layer containing at least silicon is more preferable, and a layer formed of a plasma polymer of an organosilicon compound is even more preferable.

The invention also provides a method for preparing a laminate, comprising the steps of depositing (i) a single-layered active energy ray-curable resin layer and (ii) an inorganic deposition layer on an organic resin substrate in sequence. A power spectrum which is obtained by analyzing layer (i) on the organic resin substrate by reflectance spectroscopy, Fourier transforming the reflected wave spectrum with respect to wave number, and plotting amplitude versus length dimension, has a first maximum value $S_1$ and a second maximum value $S_2$ at lengths $L_1$ and $L_2$ which are equal to or greater than a threshold $L_0$ in length dimension, respectively. In a domain of the power spectrum which is defined by excluding the threshold $L_0$ and less, provided that the threshold $L_0$ is an arbitrary value of $1\times10^{-6}$ to $3\times10^{-6}$ m, the first maximum value $S_1$ at $L_1$ shows a signal $S_1$ to noise N ratio ($S_1$/N) of at least 5, and the second maximum value $S_2$ at $L_2$ shows a signal $S_2$ to noise N ratio ($S_2$/N) of at least 2.

In preferred embodiments of the method for preparing a laminate, the step of depositing single-layered active energy ray-curable resin layer (i) on the organic resin substrate comprises the steps of:

(α) coating the organic resin substrate only once with an active energy ray-curable coating composition containing (A) a silicate oligomer having the above general formula (1) and (B) a bifunctional (meth)acrylate having the above general formula (3),
(β) heating the active energy ray-curable coating composition at 60 to 100°C for 3 to 15 minutes after coating and before curing of the coating composition, and
(γ) irradiating active energy ray to the active energy ray-curable coating composition for curing it.

In step (α), the organic resin substrate is coated only once with an active energy ray-curable coating composition containing (A) a silicate oligomer having the general formula (1) and (B) a bifunctional (meth)acrylate having the general formula (3).

Since both the silicate oligomer (A) and the bifunctional (meth)acrylate (B) are contained according to the invention, the power spectrum is efficiently split.

The active energy ray-curable coating composition used herein may be the same as described above for the laminate.

In step (β), the active energy ray-curable coating composition is heated at 60 to 100°C, preferably 70 to 90°C

for 3 to 15 minutes, preferably 5 to 10 minutes after coating and before curing of the coating composition.

By virtue of step (β), the power spectrum obtained from the reflected wave spectrum of layer (i) is efficiently split.

In step (γ) following steps (α) and (β), active energy ray is irradiated to the active energy ray-curable coating composition for curing it.

The active energy ray used herein is preferably at least one selected from the group consisting of ultraviolet (UV), electron beam (EB), radiation, and infrared (IR), and more preferably contains at least UV. During active energy ray irradiation, the accumulative energy dose is preferably 300 to 3,000 $mJ \cdot cm^{-2}$, more preferably 500 to 2,000 $mJ \cdot cm^{-2}$, even more preferably 600 to 1,800 $mJ \cdot cm^{-2}$.

In the method for preparing a laminate according to the invention, the inorganic deposition layer (ii) may be deposited after steps (α) to (γ). In other embodiments, the method may further include, before deposition of layer (ii) and between steps (β) and (γ), the step (δ) of inspecting the power spectrum which is obtained from reflected wave spectrum measurement.

In this step (δ), the procedure described above for the laminate may be used. Since step (δ) is a non-destructive inspection, it is easily performed as compared with other procedures, for example, the procedure described in Patent Document 3.

In the method for preparing a laminate according to the invention, the inorganic deposition layer (ii) may be formed after steps (α), (β), optional (δ), and (γ). The inorganic deposition layer preferably has a thickness of 0.1 to 10 μm.

The inorganic deposition layer (ii) is not particularly limited as long as it is formed by a dry deposition technique. Exemplary is a layer composed mainly of at least one metal selected from Si, Ti, Zn, Al, Ga, In, Ce, Bi, Sb, B, Zr, Sn and Ta, or an oxide, nitride or sulfide of such metal. Also a diamond-like carbon film layer having a high hardness and improved insulation is exemplary.

The technique for depositing the inorganic deposition layer is not particularly limited as long as it is a dry deposition technique. Examples of the dry deposition technique include physical vapor phase growth such as resistance heating evaporation, EB evaporation, molecular beam epitaxy, ion beam deposition, ion plating and sputtering, and chemical vapor phase growth such as thermal CVD, plasma CVD, photo-CVD, epitaxial CVD, atomic layer CVD, and catalytic CVD.

The inorganic deposition layer (ii) is preferably formed by plasma polymerization of an organosilicon compound.

The plasma polymerization may be carried out by the well-known technique (Journal of the American Chemical Society, 2006, Vol. 128, 11018) or by supplying an organosilicon compound to a commercial plasma setup (for example, available from Sakigake Semiconductor Co., Ltd.).

The organosilicon compound which can be used herein preferably has a molecular weight of 50 to 1,000. The inorganic deposition layer (ii) preferably contains at least one organosilicon compound and optionally in combination with another well-known substance which can be utilized in CVD (see Chemical Review, 2010, Vol. 110, 4417-4446).

## EXAMPLES

Synthesis Examples, Preparation Examples, Examples, and Comparative Examples are given below for illustrating the invention although the invention is not limited thereto.

Molecular weight is a number average molecular weight as measured by GPC versus polystyrene standards. Viscosity is measured at 25°C by a rotational viscometer.

### (1) SYNTHESIS OF COMPOUNDS

Synthesis Example 1 Synthesis of (A)-1

[Chem. 9]

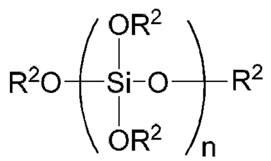

n = 4

$R^2 = (CH_2)_2OC(O)CH=CH_2$

(A)-1

A 2-L flask equipped with a stirrer, Dean-Stark trap/condenser, dropping funnel, and thermometer was charged with 235 g (0.5 mol) of Methyl Silicate 51 (Colcoat Co., Ltd.), 0.1 g of TBT700 (Nippon Soda Co., Ltd.), and 0.6 g of di-tert-butylhydroxytoluene, and heated at 85°C. To this mixture, 551 g (5 mol) of hydroxyethyl acrylate was added to effect reaction. It was observed that 80 g of methanol was distilled out. The reaction mixture was heated under reduced pressure (100°C, 5 mmHg) for 2 hours, obtaining a colorless liquid (A)-1 (yield 95%).

Synthesis Example 2 Synthesis of (A)-2

[Chem. 10]

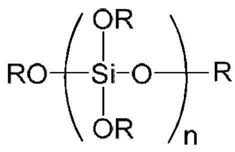

(A)-2

n = 4
R = $R^1$ or $R^2$
$R^1 = CH_3$
$R^2 = (CH_2)_2OC(O)CH=CH_2$
$R^1/R^2 = 8$

A 2-L flask equipped with a stirrer, Dean-Stark trap/condenser, dropping funnel, and thermometer was charged with 235 g (0.5 mol) of Methyl Silicate 51 (Colcoat Co., Ltd.), 0.1 g of TBT700 (Nippon Soda Co., Ltd.), and 0.6 g of di-tert-butylhydroxytoluene, and heated at 85°C. To this mixture, 61 g (0.55 mol) of hydroxyethyl acrylate was added to effect reaction. It was observed that 15 g of methanol was distilled out. The reaction mixture was heated under reduced pressure (100°C, 5 mmHg) for 2 hours, obtaining a colorless liquid (A)-2 (yield 95%).

Synthesis Example 3 Synthesis of (A)-3

[Chem. 11]

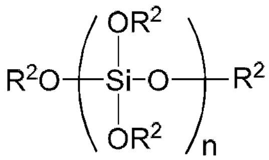

(A)-3

n = 7
$R^2 = (CH_2)_2OC(O)CH=CH_2$

A 2-L flask equipped with a stirrer, Dean-Stark trap/condenser, dropping funnel, and thermometer was charged with 158 g (0.2 mol) of Methyl Silicate 53A (Colcoat Co., Ltd.,), 0.1 g of TBT700 (Nippon Soda Co., Ltd.), and 0.4 g of di-tert-butylhydroxytoluene, and heated at 85°C. To this mixture, 372 g (3.2 mol) of hydroxyethyl acrylate was added to effect reaction. It was observed that 60 g of methanol was distilled out. The reaction mixture was heated under reduced pressure (100°C, 5 mmHg) for 2 hours, obtaining a colorless liquid (A)-3 (yield 95%).

Synthesis Example 4 Synthesis of (A)-4

[Chem. 12]

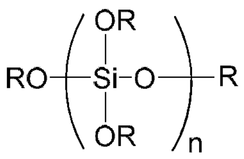

n = 7
$R = R^1$ or $R^2$
$R^1 = CH_3$
$R^2 = (CH_2)_2OC(O)CH=CH_2$
$R^1/R^2 = 8$

(A)-4

A 2-L flask equipped with a stirrer, Dean-Stark trap/condenser, dropping funnel, and thermometer was charged with 158 g (0.2 mol) of Methyl Silicate 53A (Colcoat Co., Ltd.), 0.1 g of TBT700 (Nippon Soda Co., Ltd.), and 0.4 g of di-tert-butylhydroxytoluene, and heated at 85°C. To this mixture, 42 g (0.36 mol) of hydroxyethyl acrylate was added to effect reaction. It was observed that 8 g of methanol was distilled out. The reaction mixture was heated under reduced pressure (100°C, 5 mmHg) for 2 hours, obtaining a colorless liquid (A)-4 (yield 95%).

Synthesis Example 5 Synthesis of vinyl polymer (Q)-1

A 2-L flask equipped with a stirrer, condenser, dropping funnel, and thermometer was charged with 33.7 g of diacetone alcohol, which was heated at 80°C under a nitrogen stream. To the flask, portions of both a monomer mix solution and an initiator solution were added in sequence.

The monomer mix solution was previously prepared as a mixture of:

20 g of γ-methacryloxypropyltrimethoxysilane (trade name "KBM-503" by Shin-Etsu Chemical Co., Ltd.) corresponding to monomer unit D, with a proportion of monomer unit D in the polymer being 20% by weight,
15 g of 2-[2'-hydroxy-5'-(2-methacryloxyethyl)phenyl]-2H-benzotriazole (trade name "RUVA-93" by Otsuka Chemical Co., Ltd.) corresponding to monomer unit E, with a proportion of monomer unit E in the polymer being 15% by weight,
60 g of methyl methacrylate (MMA),
5 g of glycidyl methacrylate (GMA) corresponding to monomer unit F, with a proportion of monomer unit F in the polymer being 65% by weight, and
140 g of diacetone alcohol.

The initiator solution was previously prepared as a mixture of 0.5 g of 2,2'-azobis(2-methylbutyronitrile) and 40 g of diacetone alcohol.

The contents were reacted at 80°C for 30 minutes, after which the remainder of both the solutions were added dropwise at 80-90°C over 20 minutes. The reaction solution was further stirred at 80-90°C for 5 hours, obtaining a product containing vinyl polymer (Q)-1. The product was a diacetone alcohol solution containing 40% by weight of polymer component (Q)-1. This polymer solution had a viscosity of 5 Pa·s, and the polymer component (Q)-1 had a weight average molecular weight of $6\times10^4$ as measured by GPC versus polystyrene standards.

Synthesis Example 6 Synthesis of acrylate (R)-1

A separable flask equipped with a reflux condenser, thermometer, and stirrer was charged with 142 g of KBM-5103 (trade name of 3-acryloyloxypropyltrimethoxysilane, by Shin-Etsu Chemical Co., Ltd.), 500 g of isopropyl alcohol, 1.0 g of tetramethylammonium hydroxide, and 20 g of deionized water, which were reacted at 20°C for 24 hours. At the end of reaction, 500 g of toluene was added for separatory operation. The organic layer was concentrated, obtaining acrylate (R)-1 having a polyhedral oligomeric silsesquioxane (POSS) structure.

Synthesis Example 7 Synthesis of water dispersion of nanoparticulate inorganic oxide (S)-1

To 66.0 g of 36 wt% titanium(IV) chloride aqueous solution (trade name TC-36, by Ishihara Sangyo Kaisha, Ltd.) were added 2.6 g of tin(IV) chloride pentahydrate (Wako Pure Chemical Industries, Ltd.) and 0.5 g of manganese(II) chloride tetrahydrate (Wako Pure Chemical Industries, Ltd.). The mixture was thoroughly mixed, and then diluted with 1,000 g of deionized water. The amounts of components incorporated in solid solution were 6 mol of tin and 2 mol of manganese per 100 mol of titanium. To the metal salt aqueous solution mixture, 300 g of 5 wt% ammonia water (Wako Pure Chemical Industries, Ltd.) was slowly added for neutralization and hydrolysis, obtaining a precipitate of titanium hydroxide containing tin and manganese.

The titanium hydroxide slurry was at pH 8. The titanium hydroxide precipitate was deionized by repeating addition of deionized water and decantation. To the deionized tin-containing titanium hydroxide precipitate, 100 g of 30 wt% aqueous hydrogen peroxide (Wako Pure Chemical Industries, Ltd.) was slowly added. The mixture was stirred at 60°C for 3 hours to drive the reaction to a full extent. Thereafter, pure water was added to adjust a concentration, obtaining a semitransparent solution of tin and manganese-containing peroxotitanic acid (solid concentration 1% by weight). An autoclave of volume 500 mL (trade name TEM-D500 by Taiatsu Techno Corp.) was charged with 350 mL of the peroxotitanic acid solution prepared above, which was hydrothermally treated under conditions: 200°C and 1.5 MPa for 240 minutes. Thereafter, the reaction mixture was removed from the autoclave to a vessel which was kept in a water bath at 25°C through a sampling tube, where it was rapidly cooled to quench the reaction, obtaining a dispersion of complex oxide nanoparticles of titanium oxide/tin oxide/manganese oxide. The nanoparticles had a volume average 50% cumulative particle size of 15 nm as measured by the dynamic light scattering method.

A separable flask equipped with a magnetic stirrer and thermometer was charged with 1,000 parts by weight of the above dispersion of complex oxide nanoparticles, 100 parts by weight of ethanol, and 2.0 parts by weight of ammonia at room temperature (25°C), which were stirred by the magnetic stirrer. The separable flask was placed in an ice bath and cooled until the content temperature reached 5°C. To this mixture, 18 parts by weight of tetraethoxysilane (trade name KBE-04, by Shin-Etsu Chemical Co., Ltd.) was added. Thereafter, the separable flask was placed in μReactorEx (Shikoku Instrumentation Co., Ltd.), where the mixture was irradiated with microwave at frequency 2.45 GHz and power 1,000 W for 1 minute while magnetic stirring. In this duration, it was confirmed by thermometer monitoring that the content temperature reached 85°C. The resulting mixture was filtered through qualitative filter paper (Advantec 2B), obtaining a dilute colloidal solution. The dilute colloidal solution was concentrated by ultrafiltration to a solids concentration of 10% by weight, obtaining a water dispersion of core-shell nanoparticles (S)-1 each consisting of a core of the complex oxide nanoparticle and a shell of silicon oxide. Notably the core-shell nanoparticles had a volume average 50% cumulative particle size of 20 nm as measured by the dynamic light scattering method.

Synthesis Example 8 Synthesis of dispersion of nanoparticulate inorganic oxide (S)-2 in solvent (T)

A 1,000-mL separable flask equipped with a magnetic stirrer was charged with 200 g of the water dispersion of nanoparticulate inorganic oxide (S)-1 obtained in Synthesis Example 7, and 255 g of cyclopentanol was added thereto. The water dispersion and cyclopentanol were not fully miscible, and kept two phases. To the flask, 20 g of 3-acryloyloxypropyltrimethoxysilane (trade name KBM-5103 by Shin-Etsu Chemical Co., Ltd.) was added. It was observed that the silane primarily dissolved in the organic layer (cyclopentanol layer). The flask was placed in a cavity of a microwave irradiation device (trade name "μReactorEx" by Shikoku Instrumentation Co., Ltd.), where a microwave was irradiated for 5 minutes while stirring by the magnetic stirrer at 700 rpm. The microwave irradiation was controlled by the built-in program so that the liquid temperature might reach 82°C at the highest. After the microwave irradiation, the flask was statically held at room temperature until the liquid temperature reached 40°C. At this stage, the inorganic oxide nanoparticle dispersion remained in a suspended state.

Thereafter, with stirring by the magnetic stirrer at 700 rpm, 255 g of propylene glycol monomethyl ether was added to the dispersion whereupon the reaction solution turned uniform and transparent. The solution in the separable flask was transferred to a distilling flask, where it was heated under a pressure of 760 mmHg to distill off water, ethanol, and methanol formed by hydrolysis of the methoxysilane compound. The remainder in the flask was cooled to room temperature and analyzed by the Karl Fischer method to find a water content of 0.20% by weight. The nanoparticulate inorganic oxide (S)-2 synthesized above had a volume average 50% cumulative particle size of 28 nm as measured by the dynamic light scattering method. The dispersion had a solid concentration of 6.3% by weight.

(2) PREPARATION OF ACTIVE ENERGY RAY-CURABLE COATING COMPOSITION

Preparation Example 1

An active energy ray-curable coating composition was prepared by feeding the components shown in Table 1 as Preparation Example 1 in the amounts (g, the same applies hereinafter) shown in Table 1 as Preparation Example 1 to a 100-mL brown PE bottle and mixing them with a coating composition shaker at 200 rpm.

Notably (B)-1 is hexanediol diacrylate having the following structure.

[Chem. 13]

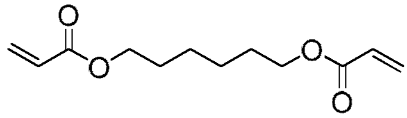

(B)-1

Preparation Examples 2 to 10

Active energy ray-curable coating compositions were prepared by the same procedure as in Preparation Example 1 except that the type and amount of components were changed as shown in Table 1 as Preparation Examples 2 to 10.

Notably (B)-2, (B)-3, and (B)-4 used in Preparation Examples 7 to 9 are compounds having the following structure.

[Chem. 14]

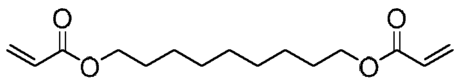

(B)-2

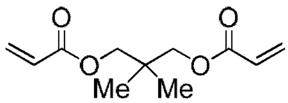

(B)-3

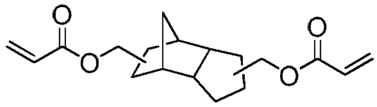

(B)-4

Table 1

| Components | | Preparation Example 1 | Preparation Example 2 | Preparation Example 3 | Preparation Example 4 | Preparation Example 5 |
|---|---|---|---|---|---|---|
| (A) | (A)-1 | 4.5 | 4.5 | 4.5 | 0 | 0 |
| | (A)-2 | 0 | 0 | 0 | 4.5 | 0 |
| | (A)-3 | 0 | 0 | 0 | 0 | 4.5 |
| | (A)-4 | 0 | 0 | 0 | 0 | 0 |
| (B) | (B)-1 | 1.0 | 2.0 | 2.0 | 1.0 | 1.0 |
| | (B)-2 | 0 | 0 | 0 | 0 | 0 |
| | (B)-3 | 0 | 0 | 0 | 0 | 0 |
| | (B)-4 | 0 | 0 | 0 | 0 | 0 |
| (P) | RUVA-93 | 0.5 | 0.5 | 0.5 | 0.5 | 0.5 |
| (Q) | (Q)-1 | 4.0 | 4.0 | 4.0 | 4.0 | 4.0 |
| (R) | (R)-1 | 4.5 | 4.5 | 4.5 | 4.5 | 4.5 |
| | TMPT-A | 5.0 | 4.0 | 3.5 | 5.0 | 5.0 |
| | DPHA | 0 | 0 | 0.5 | 0 | 0 |
| (S) | (S)-2 | 2.0 | 2.0 | 2.0 | 2.0 | 2.0 |
| | Silica in IPA-ST | 0 | 0 | 0 | 0 | 0 |

(continued)

| Components | | Preparation Example 1 | Preparation Example 2 | Preparation Example 3 | Preparation Example 4 | Preparation Example 5 |
|---|---|---|---|---|---|---|
| (T) | PGM | 15 | 15 | 15 | 15 | 15 |
| | Cyclopentanol | 15 | 15 | 15 | 15 | 15 |
| | IPA | 0 | 0 | 0 | 0 | 0 |
| (U) | DAROCUR 1173 | 1.2 | 1.2 | 1.2 | 1.2 | 1.2 |
| | Irgacure TPO | 0.3 | 0.3 | 0.3 | 0.3 | 0.3 |
| | Irgacure 819 | 0.2 | 0.2 | 0.2 | 0.2 | 0.2 |
| Components | | Preparation Example 6 | Preparation Example 7 | Preparation Example 8 | Preparation Example 9 | Preparation Example 10 |
| (A) | (A)-1 | 0 | 4.5 | 4.5 | 4.5 | 4.5 |
| | (A)-2 | 0 | 0 | 0 | 0 | 0 |
| | (A)-3 | 0 | 0 | 0 | 0 | 0 |
| | (A)-4 | 4.5 | 0 | 0 | 0 | 0 |
| (B) | (B)-1 | 1.0 | 0 | 0 | 0 | 1.0 |
| | (B)-2 | 0 | 1.0 | 0 | 0 | 0 |
| | (B)-3 | 0 | 0 | 1.0 | 0 | 0 |
| | (B)-4 | 0 | 0 | 0 | 1.0 | 0 |
| (P) | RUVA-93 | 0.5 | 0.5 | 0.5 | 0.5 | 1.0 |
| (Q) | (Q)-1 | 4.0 | 4.0 | 4.0 | 4.0 | 4.0 |
| (R) | (R)-1 | 4.5 | 4.5 | 4.5 | 4.5 | 4.5 |
| | TMPT-A | 5.0 | 5.0 | 5.0 | 5.0 | 5.0 |
| | DPHA | 0 | 0 | 0 | 0 | 0 |
| (S) | (S)-2 | 2.0 | 2.0 | 2.0 | 2.0 | 0 |
| | Silica in IPA-ST | 0 | 0 | 0 | 0 | 2.0 |
| (T) | PGM | 15 | 15 | 15 | 15 | 12.7 |
| | Cyclopentanol | 15 | 15 | 15 | 15 | 12.7 |
| | IPA | 0 | 0 | 0 | 0 | 4.7 |
| (U) | DAROCUR 1173 | 1.2 | 1.2 | 1.2 | 1.2 | 1.2 |
| | Irgacure TPO | 0.3 | 0.3 | 0.3 | 0.3 | 0.3 |
| | Irgacure 819 | 0.2 | 0.2 | 0.2 | 0.2 | 0.2 |

The abbreviations in Table 1 have the following meanings.

RUVA-93: 2-[3-(2H-benzotriazol-2-yl)-4-hydroxyphenyl]ethyl methacrylate
TMPT-A: trimethylolpropane triacrylate
DPHA: dipentaerythritol hexaacrylate
PGM: propylene glycol monomethyl ether
IPA: isopropyl alcohol
DAROCUR 1173: 2-hydroxy-2-methyl-1-phenyl-1-propanone
Irgacure TPO: diphenyl(2,4,6-trimethylbenzoyl)phosphine oxide

Irgacure 819: bis(2,4,6-trimethylbenzoyl)phenylphosphine oxide
IPA-ST: isopropyl alcohol-dispersed silica sol (Nissan Chemical Corp., $SiO_2$ concentration 30 wt%, volume average 50% cumulative particle size as measured by the dynamic light scattering method 15 nm)

Comparative Preparation Example 1

Preparation of heat-curable acrylic resin composition (PR-1)

A heat-curable resin composition PR-1 was prepared by feeding 100 g of a 40 wt% diacetone alcohol solution of vinyl polymer (Q)-1, 100 g of propylene glycol monomethyl ether, and 20 g of silica sol (trade name PMA-ST by Nissan Chemical Corp.) and thoroughly mixing them.

Comparative Preparation Example 2

Preparation of heat-curable silicone resin composition (SC-1)

A 500-mL flask was charged with 50 g of methyltrimethoxysilane (trade name KBM-13 by Shin-Etsu Chemical Co., Ltd.). A mixture of 30 g of Snowtex O (water-dispersed silica sol by Nissan Chemical Corp., average particle size 15-20 nm, $SiO_2$ content 20 wt%), 45 g of the water dispersion of nanoparticulate inorganic oxide (S)-1 obtained in Synthesis Example 7, and 0.3 g of acetic acid was added to the flask. As the mixture was added, an exotherm due to hydrolysis was noted, with the internal temperature rising to 50°C. At the end of addition, stirring was continued at 60°C for 3 hours to complete hydrolysis.

Thereafter, 56 g of cyclohexanone was added to the solution. The solution was heated under atmospheric pressure until the liquid temperature reached 92°C, for distilling off the methanol formed by hydrolysis and effecting condensation. Then 75 g of isopropanol as diluent, 0.1 g of KP-341 (Shin-Etsu Chemical Co., Ltd.) as leveling agent, 0.3 g of acetic acid, and 0.8 g of a 10 wt% tetrabutylammonium hydroxide aqueous solution (Wako Pure Chemical Industries, Ltd., guaranteed reagent) were added. The mixture was stirred and filtered through a paper filter, obtaining 200 g of SC-1 with a nonvolatile concentration of 20% by weight.

Comparative Preparation Examples 3 to 7

Active energy ray-curable coating compositions were prepared by the same procedure as in Preparation Example 1 except that the type and amount of components were changed as shown in Table 2 as Comparative Preparation Examples 3 to 7.

It is noted that the coating compositions of Comparative Preparation Examples 3 and 4 did not contain any components categorized as (A). The coating compositions of Comparative Preparation Examples 5 and 6 did not contain any components categorized as (B). The coating composition of Comparative Preparation Example 7 did not contain any components categorized as (A) and (B).

Even when these components were not contained, neither gelation nor sedimentation of certain components occurred, and semitransparent uniform coating compositions similar to those of Preparation Examples 1 to 10 were obtained.

Table 2

| Components | | Comparative Preparation Example 3 | Comparative Preparation Example 4 | Comparative Preparation Example 5 | Comparative Preparation Example 6 | Comparative Preparation Example 7 |
|---|---|---|---|---|---|---|
| (A) | (A)-1 | 0 | 0 | 4.5 | 0 | 0 |
| | (A)-2 | 0 | 0 | 0 | 0 | 0 |
| | (A)-3 | 0 | 0 | 0 | 0 | 0 |
| | (A)-4 | 0 | 0 | 0 | 4.5 | 0 |

(continued)

| Components | | Comparative Preparation Example 3 | Comparative Preparation Example 4 | Comparative Preparation Example 5 | Comparative Preparation Example 6 | Comparative Preparation Example 7 |
|---|---|---|---|---|---|---|
| (B) | (B)-1 | 1.0 | 0 | 0 | 0 | 0 |
| | (B)-2 | 0 | 0 | 0 | 0 | 0 |
| | (B)-3 | 0 | 1.0 | 0 | 0 | 0 |
| | (B)-4 | 0 | 0 | 0 | 0 | 0 |
| (P) | RUVA-93 | 0.5 | 0.5 | 0.5 | 0.5 | 0.5 |
| (Q) | (Q)-1 | 4.0 | 4.0 | 4.0 | 4.0 | 4.0 |
| (R) | (R)-1 | 9.0 | 9.0 | 4.5 | 4.5 | 9.0 |
| | TMPT-A | 5.0 | 5.0 | 6.0 | 6.0 | 6.0 |
| | DPHA | 0 | 0 | 0 | 0 | 0 |
| (S) | (S)-2 | 2.0 | 2.0 | 2.0 | 2.0 | 2.0 |
| (T) | PGM | 15 | 15 | 15 | 15 | 15 |
| | Cyclopentanol | 15 | 15 | 15 | 15 | 15 |
| (U) | DAROCUR 1173 | 1.2 | 1.2 | 1.2 | 1.2 | 1.2 |
| | Irgacure TPO | 0.3 | 0.3 | 0.3 | 0.3 | 0.3 |
| | Irgacure 819 | 0.2 | 0.2 | 0.2 | 0.2 | 0.2 |

(3) PREPARATION OF LAMINATE

Example 1

Step ($\alpha$): The active energy ray-curable coating composition prepared in Preparation Example 1 was applied to a polycarbonate resin substrate of 5 mm thick by flow coating, and allowed to stand at room temperature for 5 minutes.

Step ($\beta$): The coating resulting from step ($\alpha$) was heated at 70°C for 5 minutes.

Step ($\gamma$): The coating resulting from step ($\beta$) was irradiated with an active energy ray (1,000 $mJ \cdot cm^{-2}$).

Step ($\delta$): The coated article cured in step ($\gamma$) was measured for a reflected wave spectrum by the following procedure.

A spectrophotometer (trade name "U-3900H" by Hitachi High-Tech Science Corp.) coupled with a reflection accessory was used to obtain a reflected wave spectrum $F(\lambda)$ measured in wavelength unit. The wavelength of the spectrum $F(\lambda)$ was converted to wave number to obtain an original function f(k). Herein $\lambda$ represents wavelength (nm), and k represents wave number ($m^{-1}$). Since f(k) was a data set of irregular intervals, it was converted to a data set (f, k) of equal width by Lagrange linear interpolation. The Fourier transform of data set (f, k) gave a parameter function $S(n \cdot L)$. The function was plotted in the diagram (FIG. 2) with an argument $n \cdot L$ divided by a representative average refractive index (1.5) being put on the abscissa axis, and a square root of the sum of a square of the real part and a square of the imaginary part of $S(n \cdot L)$ being put on the ordinate axis. The values of $L_0$, $L_1$, $L_2$, N, $S_1$, and $S_2$ were read from FIG. 2, indicating $L_0 = 2.0 \times 10^{-6}$ m, $L_1 = 9.2 \times 10^{-6}$ m, $L_2 = 10.5 \times 10^{-6}$ m, $S_1/N = 18.0$, and $S_2/N = 4.6$.

Step ($\varepsilon$): An inorganic deposition layer (ii) was formed by the procedure described in the Journal of the American Chemical Society, 2006, Vol. 128, 11018, whereby a laminate was prepared. The inorganic deposition layer was formed by creating a plasma by RF coil induction in vacuum and supplying oxygen, argon, and tetraethoxysilane (trade name KBE-04 by Shin-Etsu Chemical Co., Ltd.) as reactant gases into the plasma. This procedure is abbreviated as $\varepsilon$-1 in Tables 3 to 8. Actual values of the parameters used are shown in Table 3.

Examples 2 to 8

Laminates were prepared as in Example 1 except that the conditions were changed as shown in Tables 3 and 4. The results of Fourier transform in step (δ) in Examples 3 and 7 are shown in FIGS. 3 and 4, respectively.

Examples 9 to 16

Laminates were prepared as in Example 1 except that inorganic deposition layer (ii) was formed by supplying methyltrimethoxysilane (trade name KBM-13 by Shin-Etsu Chemical Co., Ltd.) to a plasma setup (SAKIGAKE-Semiconductor Co., Ltd) in step (ε). This inorganic deposition procedure is abbreviated as ε-2 in Tables 5 to 8. Actual values of the parameters used are shown in Tables 5 and 6. The results of Fourier transform in step (δ) of Example 13 are shown in FIG. 5.

Comparative Examples 1 to 6

Laminates were prepared as in Example 1 or 9 except that the coating compositions of Comparative Preparation Examples 3 to 7 were used as the active energy ray-curable coating compositions in step (α) and the heating temperature and time in step (β) were changed. Actual values of the parameters used are shown in Tables 9 and 10. The results of Fourier transform in step (δ) of Comparative Examples 1 and 4 are shown in FIGS. 6 and 7, respectively.

Comparative Examples 7 and 8

Laminates were prepared by performing coating and curing steps twice using heat-curable coating compositions in step (α). The heat-curable acrylic resin composition PR-1 prepared in Comparative Preparation Example 1 was applied to a polycarbonate substrate of 5 mm thick by flow coating, and allowed to stand at room temperature for 15 minutes. Thereafter, the heat-curable acrylic resin layer was cured at 120°C for 1 hour (step (β)). The coated substrate was cooled to room temperature, after which the heat-curable silicone resin composition SC-1 prepared in Comparative Preparation Example 2 was applied thereon by flow coating, and allowed to stand at room temperature for 15 minutes. Thereafter, the heat-curable silicone resin layer was cured at 120°C for 1 hour to form a multilayer heat-curable resin layer corresponding to layer (i) according to the invention (step (β)).

Since the active energy ray irradiation (step (γ)) was unnecessary in Comparative Examples 7 and 8 wherein the resin layers were heat-curable, this was followed by step (δ) of reflected wave spectrum measurement and Fourier transform (FIG. 8). In Comparative Example 7, ε-1 was carried out to form inorganic deposition layer (ii). In Comparative Example 8, ε-2 was carried out to form inorganic deposition layer (ii). Actual values of the parameters used are shown in Table 10.

The laminates prepared in above Examples and Comparative Examples were evaluated by the following tests. The results are also shown in Tables 3 to 8.

(1) Initial adhesion

The laminate was evaluated for initial adhesion according to JIS K5400 by scribing the coating with a razor blade along 6 longitudinal and 6 transverse lines at a spacing of 2 mm to define 25 square sections, tightly attaching Cellotape® (Nichiban Co., Ltd.) thereto, quickly pulling back the tape at 90°, and counting the number (X) of coating sections kept unpeeled at any stacking interfaces of layers (i) and (ii) to give an index X/25. A sample with X=25 was rated good (O), and a sample with X<25 was rated poor (X).

(2) Adhesion after 2 hour boiling

After the laminate was boiled in boiling water for 2 hours, an adhesion test was carried out as in the initial adhesion test. The number (X) of remaining sections was expressed as X/25. A sample with X=25 was rated good (O), and a sample with X<25 was rated poor (X).

(3) Adhesion after 4 hour boiling

After the laminate was boiled in boiling water for 4 hours, an adhesion test was carried out as in the initial adhesion test. The number (X) of remaining sections was expressed as X/25. A sample with X=25 was rated good (O), and a sample with X<25 was rated poor (X).

(4) Weather resistance (500 MJ·cm$^{-2}$)

A test was carried out on an accelerated weathering tester Q-SUN Xe-3 (Sanyo Trading Co., Ltd.) under conditions according to SAE J2527 until an integrating dosimeter coupled to the tester reached a dose of 500 MJ·cm$^{-2}$. A sample in which the differences in haze and yellowness index before and after the test were less than 5 and no cracks appeared was rated good (O), and otherwise rated poor (X).

(5) Adhesion (500 MJ·cm$^{-2}$)

The sample which had undergone the weathering test in a dose of 500 MJ·cm$^{-2}$ was evaluated for adhesion according to JIS K5400 by scribing the coating with a razor blade along 6 longitudinal and 6 transverse lines at a spacing of 2 mm to define 25 square sections, tightly attaching Cellotape® (Nichiban Co., Ltd.) thereto, quickly pulling back the tape at 90°, and counting the number (X) of coating sections kept unpeeled at any stacking interfaces of layers (i) and (ii) to give an index X/25. A sample with X=25 was rated good (O), and a sample with X<25 was rated poor (X). As a unique peeling mode, when a portion corresponding to layer (i) consisted of a heat-curable acrylic resin layer and a heat-curable silicone resin layer (Comparative Examples 7 and 8), peeling might occur between these layers. Such a sample was rated mediocre (Δ).

(6) Weather resistance (1,000 MJ·cm$^{-2}$)

A test was carried out on an accelerated weathering tester Q-SUN Xe-3 (Sanyo Trading Co., Ltd.) under conditions according to SAE J2527 until an integrating dosimeter coupled to the tester reached a dose of 1,000 MJ·cm$^{-2}$. A sample in which the differences in haze and yellowness index before and after the test were less than 5 and no cracks appeared was rated good (O), and otherwise rated poor (X).

(7) Adhesion (1,000 MJ·cm$^{-2}$)

The sample which had undergone the weathering test in a dose of 1,000 MJ·cm$^{-2}$ was evaluated for adhesion according to JIS K5400 by scribing the coating with a razor blade along 6 longitudinal and 6 transverse lines at a spacing of 2 mm to define 25 square sections, tightly attaching Cellotape® (Nichiban Co., Ltd.) thereto, quickly pulling back the tape at 90°, and counting the number (X) of coating sections kept unpeeled at any stacking interfaces of layers (i) and (ii) to give an index X/25. A sample with X=25 was rated good (O), and a sample with X<25 was rated poor (X). As a unique peeling mode, when a portion corresponding to layer (i) consisted of a heat-curable acrylic resin layer and a heat-curable silicone resin layer (Comparative Examples 7 and 8), peeling might occur between these layers. Such a sample was rated mediocre (Δ).

Table 3

| Laminate | Preparation step | | Example 1 | Example 2 | Example 3 | Example 4 |
|---|---|---|---|---|---|---|
| Layer (i) | Step (α) | | Preparation Example 1 | Preparation Example 1 | Preparation Example 1 | Preparation Example 1 |
| | Step (β) | | 70°C / 5 min | 80°C / 5 min | 90°C / 5 min | 80°C / 10 min |
| | Step (γ) | | 1,000 mJ·cm$^{-2}$ | 1,000 mJ·cm$^{-2}$ | 1,000 mJ·cm$^{-2}$ | 1,000 mJ·cm$^{-2}$ |
| | Step (δ) | $S_1$/N | 18.0 | 15.5 | 14.7 | 16.0 |
| | | $S_2$/N | 4.6 | 7.0 | 5.0 | 5.5 |
| | | $L_1$ | 9.2 | 8.8 | 8.7 | 9.9 |
| | | $L_2$ | 10.5 | 10.2 | 10.6 | 11.2 |
| Layer (ii) | Step (ε) | | ε-1 | ε-1 | ε-1 | ε-1 |

(continued)

| Laminate | Preparation step | | Example 1 | Example 2 | Example 3 | Example 4 |
|---|---|---|---|---|---|---|
| Test results | Evaluation item | | Example 1 | Example 2 | Example 3 | Example 4 |
| | Initial adhesion | | ○ | ○ | ○ | ○ |
| | Adhesion after 2h boiling | | ○ | ○ | ○ | ○ |
| | Adhesion after 4h boiling | | ○ | ○ | ○ | ○ |
| | Weather resistance (500 $MJ \cdot cm^{-2}$) | | ○ | ○ | ○ | ○ |
| | Weathering adhesion (500 $MJ \cdot cm^{-2}$) | | ○ | ○ | ○ | ○ |
| | Weather resistance (1,000 $MJ \cdot cm^{-2}$) | | ○ | ○ | ○ | ○ |
| | Weathering adhesion (1,000 $MJ \cdot cm^{-2}$) | | ○ | ○ | ○ | ○ |

Table 4

| Laminate | Preparation step | | Example 5 | Example 6 | Example 7 | Example 8 |
|---|---|---|---|---|---|---|
| Layer (i) | Step (α) | | Preparation Example 1 | Preparation Example 2 | Preparation Example 2 | Preparation Example 3 |
| | Step (β) | | 80°C / 5 min | 80°C / 5 min | 80°C / 10 min | 80°C / 5 min |
| | Step (γ) | | 1,000 $mJ \cdot cm^{-2}$ | 1,000 $mJ \cdot cm^{-2}$ | 1,000 $mJ \cdot cm^{-2}$ | 1,000 $mJ \cdot cm^{-2}$ |
| | Step (δ) | $S_1$/N | 20.5 | 25.3 | 30.7 | 15.9 |
| | | $S_2$/N | 7.3 | 9.0 | 8.7 | 3.3 |
| | | $L_1$ | 7.1 | 10.5 | 9.1 | 7.5 |
| | | $L_2$ | 8.9 | 11.9 | 10.0 | 10.8 |
| Layer (ii) | Step (ε) | | ε-1 | ε-1 | ε-1 | ε-1 |
| Test results | Evaluation item | | Example 5 | Example 6 | Example 7 | Example 8 |
| | Initial adhesion | | ○ | ○ | ○ | ○ |
| | Adhesion after 2h boiling | | ○ | ○ | ○ | ○ |
| | Adhesion after 4h boiling | | ○ | ○ | ○ | ○ |
| | Weather resistance (500 $MJ \cdot cm^{-2}$) | | ○ | ○ | ○ | ○ |
| | Weathering adhesion (500 $MJ \cdot cm^{-2}$) | | ○ | ○ | ○ | ○ |
| | Weather resistance (1,000 $MJ \cdot cm^{-2}$) | | ○ | ○ | ○ | ○ |
| | Weathering adhesion (1,000 $MJ \cdot cm^{-2}$) | | ○ | ○ | ○ | ○ |

Table 5

| Laminate | Preparation step | | Example 9 | Example 10 | Example 11 | Example 12 |
|---|---|---|---|---|---|---|
| Layer (i) | Step (α) | | Preparation Example 4 | Preparation Example 5 | Preparation Example 6 | Preparation Example 7 |
| | Step (β) | | 80°C / 5 min | 80°C / 5 min | 80°C / 5 min | 80°C / 5 min |
| | Step (γ) | | 1,000 $mJ \cdot cm^{-2}$ | 1,000 $mJ \cdot cm^{-2}$ | 1,000 $mJ \cdot cm^{-2}$ | 1,000 $mJ \cdot cm^{-2}$ |
| | Step (δ) | $S_1/N$ | 11.5 | 14.0 | 21.6 | 19.7 |
| | | $S_2/N$ | 7.1 | 4.0 | 7.8 | 9.3 |
| | | $L_1$ | 9.7 | 11.0 | 6.9 | 8.9 |
| | | $L_2$ | 12.0 | 12.0 | 8.0 | 10.2 |
| Layer (ii) | Step (ε) | | ε-2 | ε-2 | ε-2 | ε-2 |
| Test results | Evaluation item | | Example 9 | Example 10 | Example 11 | Example 12 |
| | Initial adhesion | | ○ | ○ | ○ | ○ |
| | Initial adhesion | | ○ | ○ | ○ | ○ |
| | Adhesion after 2h boiling | | ○ | ○ | ○ | ○ |
| | Adhesion after 4h boiling | | ○ | ○ | ○ | ○ |
| | Weather resistance (500 $MJ \cdot cm^{-2}$) | | ○ | ○ | ○ | ○ |
| | Weathering adhesion (500 $MJ \cdot cm^{-2}$) | | ○ | ○ | ○ | ○ |
| | Weather resistance (1,000 $MJ \cdot cm^{-2}$) | | ○ | ○ | ○ | ○ |

Table 6

| Laminate | Preparation step | | Example 13 | Example 14 | Example 15 | Example 16 |
|---|---|---|---|---|---|---|
| Layer (i) | Step (α) | | Preparation Example 7 | Preparation Example 8 | Preparation Example 9 | Preparation Example 10 |
| | Step (β) | | 80°C / 10 min | 80°C / 5 min | 80°C / 5 min | 80°C / 5 min |
| | Step (γ) | | 1,000 $mJ \cdot cm^{-2}$ | 1,000 $mJ \cdot cm^{-2}$ | 1,000 $mJ \cdot cm^{-2}$ | 1,000 $mJ \cdot cm^{-2}$ |
| | Step (δ) | $S_1/N$ | 12.3 | 17.5 | 13.0 | 22.5 |
| | | $S_2/N$ | 2.3 | 5.0 | 8.0 | 10.4 |
| | | $L_1$ | 7.9 | 8.0 | 10.3 | 12.5 |
| | | $L_2$ | 11.1 | 9.5 | 12.0 | 14.5 |
| Layer (ii) | Step (ε) | | ε-2 | ε-2 | ε-2 | ε-2 |

(continued)

| Laminate | Preparation step | Example 13 | Example 14 | Example 15 | Example 16 |
|---|---|---|---|---|---|
| Test results | Evaluation item | Example 13 | Example 14 | Example 15 | Example 16 |
| | Initial adhesion | ○ | ○ | ○ | ○ |
| | Adhesion after 2h boiling | ○ | ○ | ○ | ○ |
| | Adhesion after 4h boiling | ○ | ○ | ○ | ○ |
| | Weather resistance (500 $MJ \cdot cm^{-2}$) | ○ | ○ | ○ | ○ |
| | Weathering adhesion (500 $MJ \cdot cm^{-2}$) | ○ | ○ | ○ | ○ |
| | Weather resistance (1,000 $MJ \cdot cm^{-2}$) | ○ | ○ | ○ | ○ |
| | Weathering adhesion (1,000 $MJ \cdot cm^{-2}$) | ○ | ○ | ○ | ○ |

Table 7

| Laminate | Preparation step | | Comparative Example 1 | Comparative Example 2 | Comparative Example 3 | Comparative Example 4 |
|---|---|---|---|---|---|---|
| Layer (i) | Step (α) | | Preparation Example 1 | Comparative Preparation Example 3 | Comparative Preparation Example 4 | Comparative Preparation Example 5 |
| | Step (β) | | 50°C / 3 min | 80°C / 5 min | 80°C / 5 min | 80°C / 5 min |
| | Step (γ) | | 1,000 $mJ \cdot cm^{-2}$ | 1,000 $mJ \cdot cm^{-2}$ | 1,000 $mJ \cdot cm^{-2}$ | 1,000 $mJ \cdot cm^{-2}$ |
| | Step (δ) | $S_1/N$ | 26.0 | 25.0 | 15.5 | 24.0 |
| | | $S_2/N$ | N.D. | N.D. | N.D. | 1.6 |
| | | $L_1$ | 9.6 | 7.5 | 8.0 | 10.4 |
| | | $L_2$ | N.D. | N.D. | N.D. | 10.9 |
| Layer (ii) | Step (ε) | | ε-1 | ε-1 | ε-1 | ε-1 |

(continued)

| Laminate | Preparation step | | Comparative Example 1 | Comparative Example 2 | Comparative Example 3 | Comparative Example 4 |
|---|---|---|---|---|---|---|
| Test results | Evaluation item | | Comparative Example 1 | Comparative Example 2 | Comparative Example 3 | Comparative Example 4 |
| | Initial adhesion | | ○ | ○ | ○ | ○ |
| | Adhesion after 2h boiling | | × | ○ | ○ | ○ |
| | Adhesion after 4h boiling | | × | × | × | ○ |
| | Weather resistance (500 $MJ \cdot cm^{-2}$) | | ○ | ○ | ○ | ○ |
| | Weathering adhesion (500 $MJ \cdot cm^{-2}$) | | × | ○ | ○ | ○ |
| | Weather resistance (1,000 $MJ \cdot cm^{-2}$) | | × | × | × | × |
| | Initial adhesion | | × | × | × | × |

Table 8

| Laminate | Preparation step | | Comparative Example 5 | Comparative Example 6 | Comparative Example 7 | Comparative Example 8 |
|---|---|---|---|---|---|---|
| Layer (i) | Step (α) | | Comparative Preparation Example 6 | Comparative Preparation Example 7 | Comparative Preparation Example 1 | Comparative Preparation Example 1 |
| | | | | | Comparative Preparation Example 2 | Comparative Preparation Example 2 |
| | Step (β) | | 80°C / 5 min | 80°C / 5 min | 120°C / 1 hour (2 times) | 120°C / 1 hour (2 times) |
| | Step (γ) | | 1,000 $mJ \cdot cm^{-2}$ | 1,000 $mJ \cdot cm^{-2}$ | 0 $mJ \cdot cm^{-2}$ | 0 $mJ \cdot cm^{-2}$ |
| | Step (δ) | $S_1/N$ | 17.0 | 18.9 | 8.9 | 8.9 |
| | | $S_2/N$ | N.D. | 1.2 | 3.8 | 3.8 |
| | | $L_1$ | 12.0 | 11.0 | 4.2 | 4.2 |
| | | $L_2$ | N.D. | 11.5 | 11.5 | 11.5 |
| Layer (ii) | Step (ε) | | ε-1 | ε-1 | ε-1 | ε-2 |

(continued)

| Laminate | Preparation step | Comparative Example 5 | Comparative Example 6 | Comparative Example 7 | Comparative Example 8 |
|---|---|---|---|---|---|
| Test results | Evaluation item | Comparative Example 5 | Comparative Example 6 | Comparative Example 7 | Comparative Example 8 |
| | Initial adhesion | ○ | ○ | ○ | ○ |
| | Adhesion after 2h boiling | ○ | ○ | ○ | ○ |
| | Adhesion after 4h boiling | × | ○ | ○ | ○ |
| | Weather resistance (500 $MJ \cdot cm^{-2}$) | × | × | ○ | ○ |
| | Weathering adhesion (500 $MJ \cdot cm^{-2}$) | × | × | ○ | ○ |
| | Weather resistance (1,000 $MJ \cdot cm^{-2}$) | × | × | ○ | ○ |
| | Initial adhesion | × | × | Δ | Δ |

As seen from Tables 3 to 8, when a power spectrum which is obtained by analyzing active energy ray-curable resin layer (i) by reflectance spectroscopy, Fourier transforming the reflected wave spectrum with respect to wave number, and plotting amplitude versus length dimension shows split peaks at certain S/N ratios (Examples 1 to 16), the resulting laminate has excellent adhesion and weather resistance.

In Examples, even when a reflected wave spectrum is repeatedly measured, split peaks appear in every power spectrum after Fourier transform in a reproducible manner. In contrast, under the conditions where a specific peak splitting does not occur in a power spectrum of active energy ray-curable resin layer (i), the laminate has inferior adhesion and weather resistance (Comparative Examples 1 to 6).

Comparative Examples 7 and 8 had a portion corresponding to layer (i) which consisted of multiple layers including a heat-curable acrylic resin layer and a heat-curable silicone resin layer. When the portion corresponding to layer (i) has a multilayer structure, multiple coating operations are required, which causes the tendency that the noise N of a power spectrum becomes higher. Although $S_2/N$ derived from multiple layers was observed, $S_1/N$ was less than 10, which did not fall within the range defined herein. In addition, a phenomenon of peeling at the interface between the heat-curable acrylic resin layer and the heat-curable silicone resin layer occurred in the weather resistance tests. Although $S_2/N$ was observed, these results were in stark contrast to those of Examples 1 to 16 in which neither peeling nor cohesive failure was observed in layer (i).

For the laminate of the invention, it is physically interpreted that the refractive index had a certain inflection point in the film thickness direction as a result of spontaneous orientation of the active energy ray-curable component in layer (i).

On the other hand, when a multilayer structure is intentionally formed of different resin layers as in Comparative Examples 7 and 8, an inflection point of refractive index necessarily exists between the layers, which results in a peak splitting in a power spectrum. In such a multilayer structure, however, peeling can occur between a heat-curable acrylic resin layer and a heat-curable silicone resin layer, and the preparation method is complicated.

This invention not only improves the curing mode of a coating composition constituting layer (i) of a laminate to a more efficient active energy ray-curing type, but also provides a method for predicting adhesion and weather resistance by expressing the degree of inflection of a refractive index in the thickness direction of a film by the degree of peak splitting of a power spectrum. That is, it becomes possible to design a laminate having excellent adhesion and weather resistance by preparing layer (i) so as to show a specific peak splitting in a power spectrum according to the invention.

It is unknown so far that the inflection (within a specific range) of a refractive index of layer (i) in a laminate contributes to an improvement in adhesion. In addition, it was believed that peak splitting in a power spectrum of a single-layered film occurs when the single-layered film has a birefringence or such peak splitting results from an error in FFT

(see Patent Document 6). That is, the practical utilization of the power spectrum is unknown. The method of using a power spectrum according to the invention has the advantage that it is readily carried out as compared with the conventional method which requires destructive inspection in cross-section of a film to determine the orientation of a component (Patent Document 3).

## Claims

1. A laminate comprising an organic resin substrate, and (i) a single-layered active energy ray-curable resin layer and (ii) an inorganic deposition layer disposed on the substrate in the described order, wherein
a power spectrum which is obtained by analyzing layer (i) on the organic resin substrate by reflectance spectroscopy, Fourier transforming the reflected wave spectrum with respect to wave number, and plotting amplitude versus length dimension, has a first maximum value $S_1$ and a second maximum value $S_2$ at lengths $L_1$ and $L_2$ which are equal to or greater than a threshold $L_0$ in length dimension, respectively,
in a domain of the power spectrum which is defined by excluding the threshold $L_0$ and less, provided that the threshold $L_0$ is an arbitrary value of $1\times10^{-6}$ to $3\times10^{-6}$ m,
the first maximum value $S_1$ at $L_1$ shows a signal $S_1$ to noise N ratio ($S_1$/N) of at least 5, and the second maximum value $S_2$ at $L_2$ shows a signal $S_2$ to noise N ratio ($S_2$/N) of at least 2.

2. A laminate of claim 1 wherein $S_1$ and $S_2$ satisfy $0.1S_1 \leq S_2 \leq 0.9S_1$.

3. A laminate of claim 1 or 2 wherein $L_1$ and $L_2$ satisfy $L_1 < L_2 \leq 1.5L_1$.

4. A laminate of any one of claims 1 to 3 wherein $L_1$ satisfies $5\times10^{-6} \leq L_1 \leq 2\times10^{-5}$ m.

5. A laminate of any one of claims 1 to 4 wherein the organic resin substrate comprises a polycarbonate.

6. A laminate of any one of claims 1 to 5 wherein the active energy ray-curable resin layer (i) comprises (A) a silicate oligomer having the general formula (1) and (B) a bifunctional (meth)acrylate having the general formula (2):

[Chem. 1]

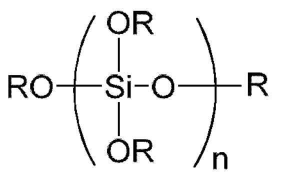 (1)

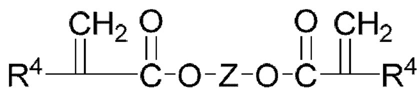 (2)

in formula (1), R is $R^1$ or $R^2$, $R^1$ is a $C_1$-$C_4$ alkyl group, $R^2$ is a substituent having the following general formula (3), a molar ratio ($R^1/R^2$) of $R^1$ to $R^2$ in all R is from 0 to 10, and n is an integer of 1 to 10,
in formula (2), Z is a divalent organic group containing a $C_4$-$C_{20}$ straight, branched, or cyclic saturated hydrocarbon, and $R^4$ is each independently hydrogen or methyl,

[Chem. 2]

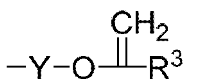 (3)

in formula (3), Y is a $C_2$-$C_{10}$ straight alkylene group, and $R^3$ is hydrogen or methyl.

7. A laminate of any one of claims 1 to 5 wherein the inorganic deposition layer (ii) is a plasma polymer of an organosilicon compound.

8. A method for preparing a laminate comprising the steps of depositing (i) a single-layered active energy ray-curable

resin layer and (ii) an inorganic deposition layer on an organic resin substrate in sequence, wherein
a power spectrum which is obtained by analyzing layer (i) on the organic resin substrate by reflectance spectroscopy, Fourier transforming the reflected wave spectrum with respect to wave number, and plotting amplitude versus length dimension, has a first maximum value $S_1$ and a second maximum value $S_2$ at lengths $L_1$ and $L_2$ which are equal to or greater than a threshold $L_0$ in length dimension, respectively,
in a domain of the power spectrum which is defined by excluding the threshold $L_0$ and less, provided that the threshold $L_0$ is an arbitrary value of $1\times10^{-6}$ to $3\times10^{-6}$ m,
the first maximum value $S_1$ at $L_1$ shows a signal $S_1$ to noise N ratio ($S_1$/N) of at least 5, and the second maximum value $S_2$ at $L_2$ shows a signal $S_2$ to noise N ratio ($S_2$/N) of at least 2.

**9.** A method of claim 8 wherein the step of depositing single-layered active energy ray-curable resin layer (i) on the organic resin substrate comprises the steps of:

(α) coating the organic resin substrate only once with an active energy ray-curable coating composition containing (A) a silicate oligomer having the general formula (1) and (B) a bifunctional (meth)acrylate having the general formula (2),
(β) heating the coating composition at 60 to 100°C for 3 to 15 minutes after coating and before curing of the coating composition, and
(γ) irradiating active energy ray to the active energy ray-curable coating composition for curing the coating composition,

[Chem. 3]

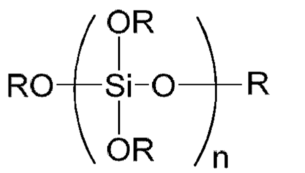 (1)

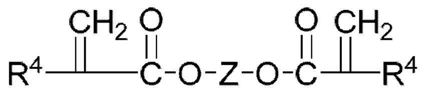 (2)

in formula (1), R is $R^1$ or $R^2$, $R^1$ is a $C_1$-$C_4$ alkyl group, $R^2$ is a substituent having the following general formula (3), a molar ratio ($R^1/R^2$) of $R^1$ to $R^2$ in all R is from 0 to 10, and n is an integer of 1 to 10,
in formula (2), Z is a divalent organic group containing a $C_4$-$C_{20}$ straight, branched, or cyclic saturated hydrocarbon, and $R^4$ is each independently hydrogen or methyl,

[Chem. 4]

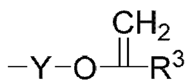 (3)

in formula (3), Y is a $C_2$-$C_{10}$ straight alkylene group, and $R^3$ is hydrogen or methyl.

**10.** A method of claim 8 or 9 wherein $S_1$ and $S_2$ satisfy $0.1S_1 \leq S_2 \leq 0.9S_1$.

**11.** A method of any one of claims 8 to 10 wherein $L_1$ and $L_2$ satisfy $L_1 < L_2 \leq 1.5L_1$.

**12.** A method of any one of claims 8 to 11 wherein $L_1$ satisfies $5\times10^{-6} \leq L_1 \leq 2\times10^{-5}$ m.

**13.** A method of any one of claims 8 to 12 wherein the organic resin substrate comprises a polycarbonate.

**14.** A method of any one of claims 8 to 13 wherein the inorganic deposition layer (ii) is formed on the active energy ray-curable resin layer (i) by plasma polymerization of an organosilicon compound.

**15.** A method of any one of claims 8 to 14, comprising, after step (γ) and before deposition of inorganic deposition layer (ii), the step (δ) of inspecting a power spectrum which is obtained by analyzing layer (i) on the organic resin substrate

by reflectance spectroscopy, Fourier transforming the reflected wave spectrum with respect to wave number, and plotting amplitude versus length dimension.

# FIG.1

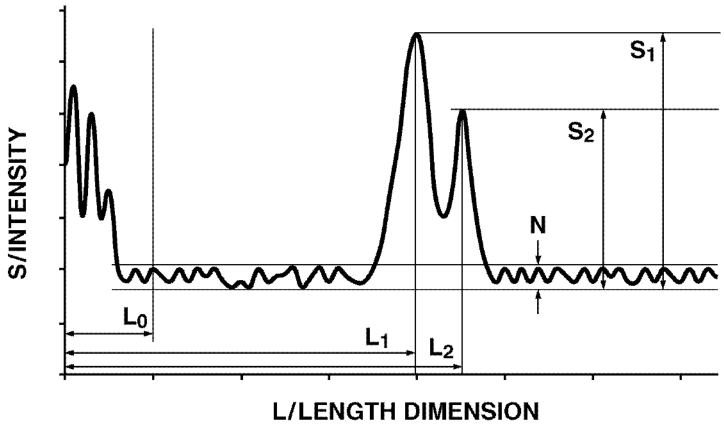


# FIG.2

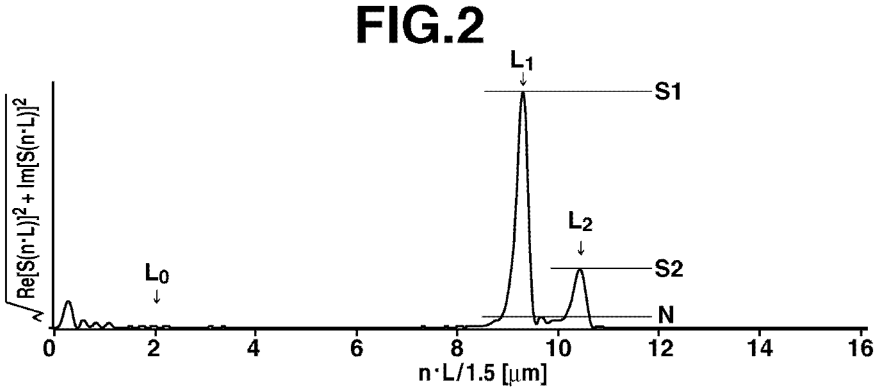


# FIG.3

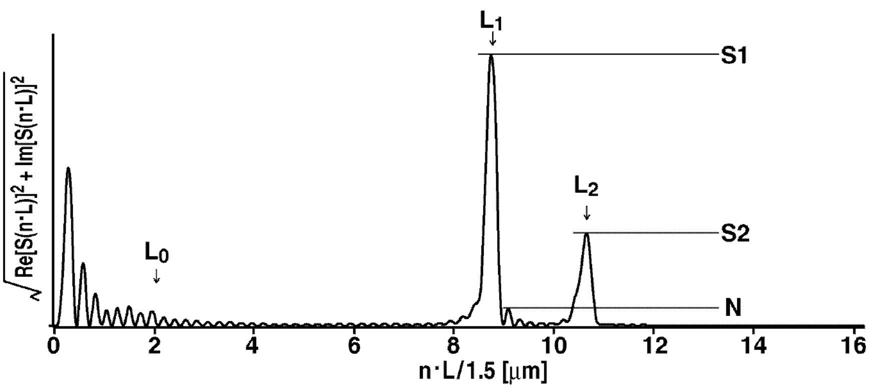

FIG.4

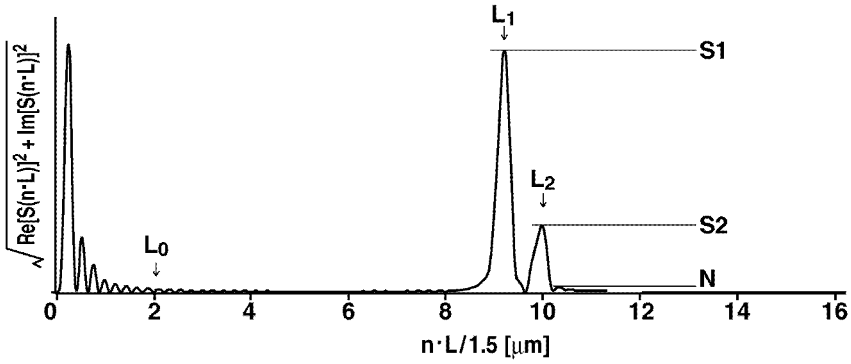


FIG.5

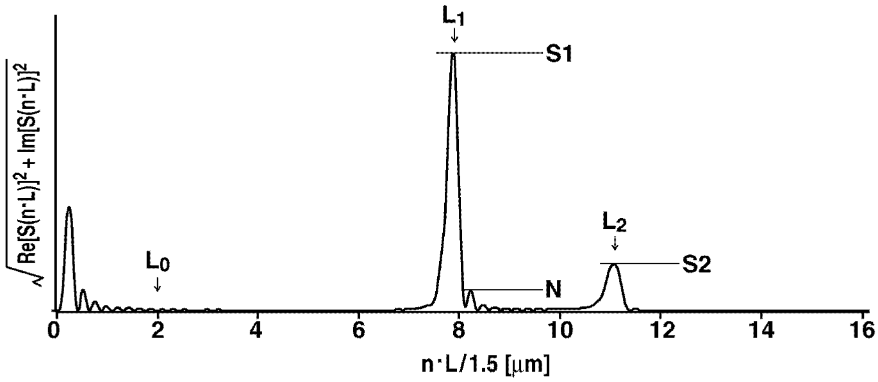


FIG.6

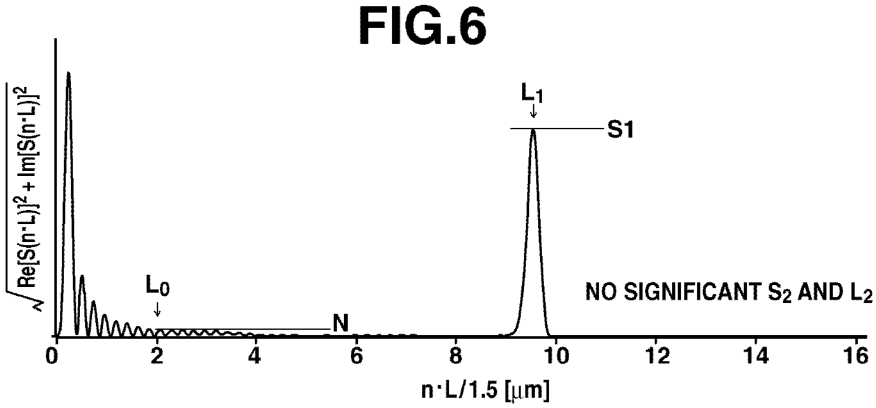

FIG.7

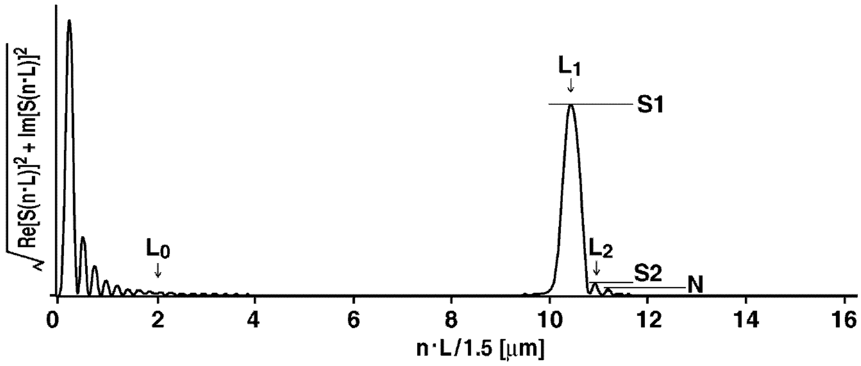
$\sqrt{Re[S(n \cdot L)]^2 + Im[S(n \cdot L)]^2}$
L0
L1
S1
L2
S2
N
0
2
4
6
8
10
12
14
16
n·L/1.5 [μm]

FIG.8

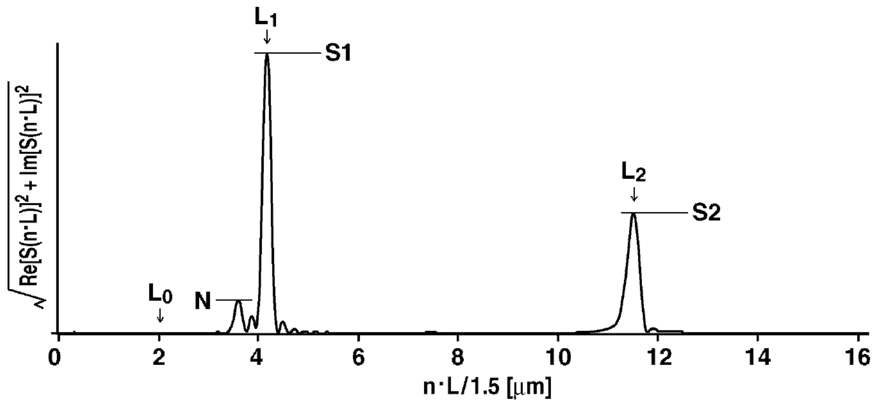
$\sqrt{Re[S(n \cdot L)]^2 + Im[S(n \cdot L)]^2}$
L1
S1
L2
S2
L0
N
0
2
4
6
8
10
12
14
16
n·L/1.5 [μm]

## INTERNATIONAL SEARCH REPORT

International application No. PCT/JP2017/027394

A. CLASSIFICATION OF SUBJECT MATTER
*B32B27/00*(2006.01)i, *B05D3/06*(2006.01)i, *B05D5/06*(2006.01)i, *B05D7/24*(2006.01)i, *B32B27/16*(2006.01)i, *B32B27/36*(2006.01)i, *C09D4/02*(2006.01)i, *C09D183/02*(2006.01)i

According to International Patent Classification (IPC) or to both national classification and IPC

B. FIELDS SEARCHED

Minimum documentation searched (classification system followed by classification symbols)
B32B1/00-43/00, B05D1/00-7/26, C09D1/00-10/00, C09D101/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2013-035274 A (Kansai Paint Co., Ltd.), 21 February 2013 (21.02.2013), examples (Family: none) | 1-15 |
| A | JP 2013-031794 A (Fujifilm Corp.), 14 February 2013 (14.02.2013), example 1 & US 2014/0178700 A1 example 1 & WO 2013/018761 A1 & EP 2740547 A1 & CN 103764301 A & KR 10-2014-0044888 A | 1-15 |

☐ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 20 October 2017 (20.10.17) | 31 October 2017 (31.10.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5768748 B
- JP 2014531334 A
- WO 2013151169 A
- JP 2013035274 A
- JP 5782353 B
- JP 2015059750 A


### Non-patent literature cited in the description


- *Journal of Polymer Research,* 2011, vol. 18 (4), 721-729
- *Journal of the American Chemical Society,* 2006, vol. 128, 11018
- *Chemical Review,* 2010, vol. 110, 4417-4446